# EUROPÄISCHE PATENTSCHRIFT

(11) **EP 2 443 355 B1**
(45) Veröffentlichungstag und Bekanntmachung des Hinweises auf die Patenterteilung: **17.12.2014**
(21) Anmeldenummer: 10723585.5
(22) Anmeldetag: 04.06.2010
(51) Int. Cl.: F16C 19/49, F16C 33/46, F16C 43/06

(54) **AXIAL-SCHRÄGWÄLZLAGER, INSBESONDERE ZUR RUNDTISCHLAGERUNG AN WERKZEUGMASCHINEN SOWIE VERFAHREN ZUR MONTAGE EINES SOLCHEN AXIAL-SCHRÄGWÄLZLAGERS**
AXIAL ANGULAR-CONTACT ROLLING BEARING, IN PARTICULAR FOR ROTARY TABLE MOUNTING ON MACHINE TOOLS, AND METHOD FOR ASSEMBLING AN AXIAL ANGULAR-CONTACT ROLLING BEARING OF SAID TYPE
PALIER À ROULEMENT À CONTACT OBLIQUE AXIAL, EN PARTICULIER POUR MONTER LE PLATEAU CIRCULAIRE SUR DES MACHINES-OUTILS, ET PROCÉDÉ DE MONTAGE D'UN TEL PALIER À ROULEMENT CONTACT OBLIQUE AXIAL

(30) Priorität: 19.06.2009 DE 102009025516
(43) Veröffentlichungstag der Anmeldung: 25.04.2012
(73) Patentinhaber: Schaeffler Technologies GmbH & Co. KG, 91074 Herzogenaurach (DE)
(72) Erfinder: BECK, Tino, 96138 Burgebrach (DE); NAGENGAST, Gerhard, 91336 Heroldsbach (DE)
(86) Internationale Anmeldenummer: PCT/EP2010/057815
(87) Internationale Veröffentlichungsnummer: WO 2010/145953

(56) Entgegenhaltungen:
- DE-A1-102005 061 792
- DE-A1-102007 050 215
- DE-A1-102007 053 169

## Beschreibung

### Gebiet der Erfindung

Die Erfindung betrifft ein Axial-Schrägwälzlager nach den oberbegriffsbildenden Merkmalen des Patentanspruchs 1 sowie ein Verfahren zur Montage eines solchen Axial-Schrägwälzlagers, und sie ist insbesondere vorteilhaft an Rundtischlagerungen von Werkzeugmaschinen anwendbar.

### Hintergrund der Erfindung

Moderne Rundtischlager für Werkzeugmaschinen werden heutzutage als einbaufertige Präzisionslager für kombinierte Belastungen mit hohen Anforderungen an die Laufgenauigkeit hergestellt und sind je nach Drehzahl und Einschaltdauer entweder als Axial-Radiallager oder Axial-Schrägkugellager ausgebildet. Beide Lagerausführungen nehmen radiale und beidseitig axiale Lasten sowie Kippmomente auf und sind radial und axial spielfrei vorgespannt. Während Axial-Radiallager vorwiegend in Standard-Anwendungen mit niedrigen Drehzahlen sowie geringer Einschaltdauer eingesetzt werden und sich in der Regel durch ein höheres, mit der Drehzahl ansteigendes Reibmoment auszeichnen, sind Axial-Schrägkugellager sehr gut für schnell drehende Anwendungen bei hoher Einschaltdauer geeignet und zeichnen sich durch deutlich geringe Reibung und niedrigen Schmierstoffverbrauch aus.

Derartige Rundtischlager sind unter anderem durch den von der Anmelderin herausgegebenen Katalog "Wälzlager" vom Januar 2006 bekannt und werden beispielsweise auf den Seiten 990 bis 1019 in den genannten Ausführungsformen als Axial-Radiallager und als Axial-Schrägkugellager beschrieben. Die gezeigten Axial-Radiallager bestehen dabei im Wesentlichen aus einem Axial- und einem Radialteil, wobei der Axialteil durch einen Axial-Nadel- oder Zylinderrollenkranz, einen äußeren Lagerring, einen Winkelring und eine Wellenscheibe gebildet wird während als Radialteil ein vollrolliger oder käfiggeführter, vorgespannter Zylinderrollensatz verwendet wird. Die dargestellten Axial-Schrägku-gellager bestehen dagegen im Wesentlichen aus einem zweiteiligen inneren Lagerring und aus einem einteiligen äußeren Lagerring sowie aus eine Vielzahl zwischen den Lagerringen in zwei gegeneinander angestellten Reihen nebeneinander angeordneten Lagerkugeln, die in Umfangsrichtung durch zwei massive Messing- oder Stahl-Lagerkäfige in gleichmäßigen Abständen zueinander gehalten werden und unter einem definierten Druckwinkel mit ihren Laufflächen auf mehreren nebeneinander an der Außenseite des inneren Lagerrings und an der Innenseite des äußeren Lagerrings angeordneten Laufbahnen abrollen. Darüber hinaus sind durch die DE 10 2007 015 421 A1 auch als doppelreihige Schrägkugelrollenlager ausgeführte Rundtischlager bekannt, die im Wesentlichen den gleichen Lageraufbau wie die genannten Axial-Schrägkugellager auf-weisen, bei denen jedoch anstelle von zwei Reihen Lagerkugeln zwei gegeneinander angestellte und in zwei Kunststoff-Lagerkäfigen geführte Doppelreihen Kugelrollen als Wälzkörper verwendet werden.

Als nachteilig hat es sich jedoch sowohl bei den beschriebenen Axial-Schrägku-gellagern als auch bei den genannten Schrägkugelrollenlagern erwiesen, dass deren innerer Lagerring axial zweigeteilt ausgeführt werden muss, um die Montage der Wälzkörper zu ermöglichen. Dabei werden in jede Laufbahnseite des äußeren Lagerrings die Lagerkäfige eingesetzt und einzeln mit den jeweiligen Wälzkörpern bestückt, um abschließend dann die beiden Teilringe des inneren Lagerrings in das Lager einzusetzen und durch eine Verschraubung miteinander zu verspannen. Die Fertigung von zwei Teilringen für den inneren Lagerring hat sich jedoch vor allem bei Rundtischlagern mit großen Durchmessern als sehr aufwendig und kostenintensiv erwiesen und macht zudem eine Sicherung gegen ein Auseinanderfallen des Lagers bei dessen Transport sowie eine äußerst präzise Abstimmung der Lagervorspannung bei dessen Verschraubung mit der Umgebungskonstruktion beim Anwender notwendig. Ebenso erfordert die zweiteilige Ausführung des inneren Lagerrings bei dessen Zusammenbau eine Zentrierung des Lagers über die gesamte Breite der beiden Teilringe, wobei sich die Teilringe bei deren Verschraubung aufgrund ihrer unterschiedlichen Toleranzen am Innendurchmesser trotz aller Sorgfalt auf einer Welle gegeneinander verschieben und/oder verspannen können und somit die Laufgenauigkeit des Rundtischlagers negativ beeinflussen. Darüber hinaus haben sich auch die bei den bekannten Lagern verwendeten Messing-, Stahl- oder Kunststoff-La-gerkäfige dahingehend als nachteilig erwiesen, dass diese entweder sehr aufwendig und kostenintensiv spanend aus Messing- oder Stahlrohlingen hergestellt werden müssen oder im Kunststoff-Spritzgießverfahren nur für Lager mit einem Bohrungsdurchmesser von maximal 200 mm bei entsprechenden Losgrößen relativ kostengünstig herstellbar sind, da bei Lagern mit größeren Bohrungsdurchmessern der Herstellungs- und Kostenaufwand für das Spritzgießen der Lagerkäfige immer weiter steigt und letztlich fertigungstechnisch nicht mehr beherrschbar ist. Aus diesen Gründen sind auch die aktuellen Ausführungen von Axial-Schrägkugellagern oder Schrägkugelrollenlagern für Rundtische auf die maximale Baugröße von 460 mm Bohrungsdurchmesser beschränkt.

Zur Vermeidung der vorgenannten Nachteile ist es aus der Praxis auch bekannt, den inneren Lagerring eines Axial-Schrägkugellagers ungeteilt bzw. einteilig auszubilden und ähnlich wie in der DE 86 07 236 U1 pro Laufbahnseite mit einer radialen Füllbohrung zu versehen, die direkt in die Laufbahnen der Lagerkugeln mündet und durch welche die Lagerkugeln von der Lagerbohrung her in die Laufbahnen eingefüllt werden. Die Füllbohrungen werden dann nach dem Befüllen des Axial-Schrägkugellagers mit allen Wälzkörpern durch je einen massiven Füllstopfen verschlossen, der laufbahnstirnseitig an die Form der Laufbahnen angepasst ist und durch einen quer verlaufenden Spannstift in seiner Verschlussstellung fixiert wird. Als Lagerkäfige kommen bei solchen Axial-Schräg-kugellagern bevorzugt spanend hergestellte Messingfensterkäfige zum Einsatz, die im Zusammenhang mit erhöht ausgebildeten äußeren Laufbahnschultern am äußeren Lagerring zugleich als Labyrinthdichtung des Lagers dienen.

Derartige Axial-Schrägkugellager kommen jedoch in aller Regel nur als nicht vorgespannte Sonderausführungen bei solchen Anwendungen zum Einsatz, wo die Lager keine größeren Lasten aufnehmen müssen, da die im Lagerbetrieb ständig von den Wälzkörpern überrollten Füllstopfen äußerst problematisch hinsichtlich der Anforderungen an die Laufbahnbelastbarkeit und Laufbahngenauigkeit sind. Dennoch müssen die Füllstopfen sehr aufwendig und hochgenau an die Laufbahnen des Lagers angepasst werden, damit die entstehenden Stoßstellen keinen vorzeitigen Verschleiß des Lagers oder insbesondere bei höheren Drehzahlen keine unerwünschten Geräusche verursachen. Da auch das Einbringen der notwendigen Lagervorspannung über den Versatz der beiden Laufbahnabstände von Innen- und Außenring sowie über die Verwendung von unterschiedlichen Kugelsortierungen relativ aufwendig ist, sind solche Axial-Schrägkugellager trotz der einteiligen Ausführung beider Lagerringe insgesamt äußerst kostenintensiv.

DE 10 2007 050 215 offenbart ein doppelreihiges Radial-Schrägwälzlager. Die Wälzkörperreihen bestehen aus Kugeln bzw. Kugelrollen. Zur Einführung der Kugelrollen ist am äußeren Lagerring eine Ausnehmung mit Einfüllrampe vorgesehen.

### Aufgabe der Erfindung

Ausgehend von den dargelegten Nachteilen der Lösungen des bekannten Standes der Technik liegt der Erfindung deshalb die Aufgabe zu Grunde, ein Axial-Schrägwälzlager, insbesondere zur Rundtischlagerung an Werkzeugmaschinen, zu konzipieren, welches sich sowohl bei der Fertigung der Lagerringe und der Lagerkäfige als auch bei der Montage der Wälzkörper und der Einstellung der Lagervorspannung durch niedrige Gestehungskosten auszeichnet und welches durch Vermeidung von im Lagerbetrieb überrollten Füllstopfen in einem der Lagerringe zugleich eine hohe Laufbahnbelastbarkeit sowie ein niedriges Geräuschniveau aufweist.

### Beschreibung der Erfindung

Zu einem ersten Teil wird diese Aufgabe bei einem Axial-Schrägwälzlager nach dem Oberbegriff des Anspruchs 1 erfindungsgemäß dadurch gelöst, dass die eine der zumindest zwei Reihen der Wälzkörper durch Lagerkugeln gebildet wird, während die andere der zumindest zwei Reihen der Wälzkörper aus Kugelrollen mit jeweils zwei symmetrisch von einer Kugelgrundform abgeflachten, parallel zueinander angeordneten Seitenflächen besteht, wobei der innere Lagerring eine einzelne, axial außermittig neben einer der Laufbahnen angeordnete, radiale Füllbohrung aufweist, durch welche sämtliche Wälzkörper der zumindest zwei Reihen in ihre Laufbahnen einfüllbar sind, und dass die Lagerkäfige der zumindest zwei Reihen der Wälzkörper jeweils als aus mehreren aneinander gereihten, gleichartigen Käfigsegmenten bestehende Segmentkäfige ausgebildet sind.

Der Erfindung liegt somit die Erkenntnis zugrunde, dass es durch den Austausch zumindest einer Reihe der bisher als Lagerkugeln ausgebildeten Wälzkörper gegen als Kugelrollen ausgebildete Wälzkörper sowie durch die bewusste Nutzung der Sonderform dieser Kugelrollen möglich ist, beide Lagerringe in kostengünstiger Weise einteilig auszubilden und das Einfüllen aller Wälzkörper in ihre Laufbahnen über eine einzige Füllbohrung zu realisieren, die nicht mehr in eine der Laufbahnen mündet und somit keine montagebedingte Schwächung der Laufbahn durch Füllstopfen verursacht, die von den Wälzkörpern überrollt werden. Eine spezielle Ausführung der Lagerkäfige als Segmentkäfige trägt dabei zudem zu einer erleichterten Montage aller Wälzkörper bei, so dass ein erfindungsgemäß ausgebildetes Axial-Schrägwälzlager sich insgesamt durch besonders niedrige Herstellungs- und Montagekosten und zugleich durch eine hohe Laufbahnbelastbarkeit auszeichnet.

Bevorzugte Ausgestaltungen und vorteilhafte Weiterbildungen des erfindungsgemäß ausgebildeten Axial-Schrägwälzlagers werden in den Unteransprüchen beschrieben.

Danach ist es gemäß Anspruch 2 vorgesehen, dass das erfindungsgemäß ausgebildete Axial-Schrägwälzlager bevorzugt zwei in O-Anordnung gegeneinander angestellte Reihen Wälzkörper aufweist, von denen die rundtischzugewandte Reihe als Lagerkugeln und die rundtischabgewandte Reihe als Kugelrollen ausgebildet sind, wobei beide Reihen bevorzugt identische Teilkreisdurchmesser und Druckwinkel sowie sämtliche Wälzkörper gleiche Durchmesser aufweisen. Die Ausbildung der rundtischzugewandten Reihe Wälzkörper als Lagerkugeln hat sich dabei dahingehend als besonders vorteilhaft erwiesen, dass die einen geringeren Rollwiderstand aufweisenden Lagerkugeln somit in Hauptlastrichtung wirken und dadurch auch statische Lasten, wie das Gewicht des Rundtisches der Werkzeugmaschine, ohne weitere Zusatzmaßnahmen aufnehmen können. Die Ausbildung beider Reihen der Wälzkörper mit gleichem Teilkreisdurchmesser und sämtlicher Wälzkörper mit gleichem Durchmesser hat sich dagegen vor allem aus Kostengründen bei der Lagerring- und Laufbahnherstellung als besonders vorteilhaft erwiesen. Alternativ ist es jedoch je nach Anwendungsfall auch möglich, bei gleichen Durchmessern der Wälzkörper beider Reihen diese auf unterschiedlichen Teilkreisdurchmessern anzuordnen oder auch die Wälzkörper beider Reihen mit unterschiedlichen Durchmessern auszubilden und auf gleichen Teilkreisdurchmessern anzuordnen. Ebenso wäre es denkbar, das Axial-Schrägwälzlager abhängig von den jeweils erforderlichen Lagertragzahlen mit zwei Reihen als Kugelrollen ausgebildeter Wälzkörper mit gleichen oder unterschiedlichen Durchmessern der Kugelgrundform und gleichen oder unterschiedlichen Teilkreisdurchmessern auszustatten und/oder die vorgenannten Wälzkörperkombinationen in äquivalenter Weise bei zwei in X-Anordnung mit gleichen oder unterschiedlichen Druckwinkeln gegeneinander angestellten Reihen von Wälzkörpern zu realisieren.

Ausgehend von der zuvor beschriebenen bevorzugten Ausbildung zeichnet sich das erfindungsgemäß ausgebildete Axial-Schrägwälzlager nach den Ansprüchen 3, 4 und 5 desweiteren dadurch aus, dass die radiale Füllbohrung im inneren Lagerring unmittelbar neben der Laufbahn der als Kugelrollen ausgebildeten Reihe Wälzkörper angeordnet ist und an ihrer innenringaußenseitigen Mündung einseitig mit einer zu dieser Laufbahn gerichteten, phasenartigen Füllschräge zum erleichterten Einfüllen der Kugelrollen ausgebildet ist. Der innere Lagerring ist dabei zwischen den beiden Laufbahnen für die Wälzkörper bis zum Laufbahngrund abgesetzt sowie eben ausgebildet, um, wie nachfolgend noch zum Montageverfahren beschrieben wird, bei einer einseitig bereits mit Wälzkörpern befüllten Laufbahn noch ein axiales Verschieben des inneren Lagerrings zu ermöglichen. Darüber hinaus weist die radiale Füllbohrung im inneren Lagerring einen geringfügig größeren Durchmesser als die Wälzkörper auf, um das Einfüllen der Wälzkörper durch diese Füllbohrung zu ermöglichen. Nach dem Einfüllen aller Wälzkörper ist die radiale Füllbohrung dann an ihrer innenringinnenseitigen Mündung bevorzugt durch einen einfachen, hohl ausgebildeten Kunststoffstopfen verschließbar und kann als zusätzliches Schmierstoffreservoir des Axial-Schrägwälzlagers genutzt werden. Alternativ ist es jedoch auch möglich, die radiale Füllbohrung im inneren Lagerring zur Aufnahme einer zusätzlichen Sensorik für ein Temperatur-, Verschleiß-, Last- oder Drehzahlüberwachungssystem oder zur Aufnahme eines zusätzlichen Feststellgliedes für statische Betriebszustände zu nutzen, wie sie beispielsweise bei Bohrbearbeitungen auf Rundtischen auftreten.

Nach Anspruch 6 ist es ein weiteres Merkmal des erfindungsgemäß ausgebildeten Axial-Schrägwälzlagers, dass die einzelnen Käfigsegmente der Lagerkäfige beider Reihen der Wälzkörper jeweils aus gleichartigen Basisteilen bestehen und zumindest die Käfigsegmente des Lagerkäfigs für die als Kugelrollen ausgebildete Reihe der Wälzkörper zusätzlich jeweils ein zweites, auf das Basisteil aufsteckbares Oberteil aufweisen. Bei der bevorzugten Ausführungsform des erfindungsgemäßen Axial-Schrägwälzlagers mit einer Reihe Lagerkugeln und einer Reihe Kugelrollen gleichen Durchmessers können somit für die Lagerkäfige beider Reihen gleichartige Basisteile verwendet werden, die nur bei der Reihe der als Kugelrollen ausgebildeten Wälzkörper mit dem Oberteil ergänzt werden. Werden jedoch in alternativer Ausführung des Axial-Schrägwälzlagers beide Reihen der Wälzkörper durch gleichgroße Kugelrollen gebildet, können die Käfigsegmente der Lagerkäfige beider Reihen nicht nur aus gleichartigen Basisteilen sondern auch aus gleichartigen Oberteilen gebildet werden. Sowohl die Basisteile als auch die Oberteile der Käfigsegmente weisen dabei im Wesentlichen bevorzugt eine Rechteckform mit der gleichen Länge auf, wobei die Breite der Basisteile in etwa der halben Lagerbreite entspricht und die Oberteile in etwa die halbe Breite der Basisteile aufweisen aber geringfügig dicker als die Basisteile ausgebildet sind. Bei großen Stückzahlen an solchen Käfigsegmenten hat es sich als besonders kostengünstig erwiesen, sowohl die Basisteile als auch die Oberteile der Käfigsegmente aus einem Kunststoff im Spritzgießverfahren herzustellen, während kleinere Stückzahlen auch relativ kostengünstig spanlos durch Stanzen und Umformen von Stahlblech oder spanend aus Messing oder Leichtmetalllegierungen herstellbar sind.

Gemäß Anspruch 7 sind die Basisteile der Käfigsegmente beider Lagerkäfige desweiteren jeweils mit zwei oder mehr kreisrunden, dem Durchmesser der Wälzkörper entsprechenden Käfigtaschen ausgebildet, die an ihren Innenseiten in Umlaufrichtung in Höhe der Taschenlängsachse zusätzlich konkave Anlaufflächen zur Reibungsoptimierung für die Wälzkörper aufweisen. Die Anzahl der Käfigtaschen richtet sich dabei nach der Größe der Wälzkörper beider Reihen sowie nach der Lagerauslegung und wird bevorzugt so gewählt, dass die erforderlichen Spritzgussformen klein und damit kostengünstig ausgelegt werden können. Dadurch ist es möglich, auch sehr große Teilkreisdurchmesser bzw. Axial-Schrägwälzlager mit einem Innendurchmesser oberhalb der bisher die maximale Baugröße darstellenden 460 mm mit Kunststoffkäfigen aus den genannten Käfigsegmenten auszurüsten. In zweckmäßiger Weiterbildung sind die Käfigtaschen in den Basisteilen der Käfigsegmente darüber hinaus nach Anspruch 8 an ihrer der Füllbohrung im inneren Lagerring zugewandten Durchmesserhälfte jeweils noch mit einer trapezförmigen, parallel zu Taschenlängsachse verlaufenden Erweiterung ausgebildet, die ebenfalls zum erleichterten Einfüllen der als Kugelrollen ausgebildeten Wälzkörper vorgesehen ist.

Gemäß den Ansprüchen 9 und 10 zeichnen sich die Basisteile der Käfigsegmente beider Lagerkäfige des erfindungsgemäß ausgebildeten Axial-Schrägwälzlager zudem noch dadurch aus, dass diese an ihrer lageraußenseitigen Randpartie jeweils in Höhe der zwischen den Käfigtaschen gebildeten Taschenstege mit mehreren T-profilförmigen Nuten zur Lagefixierung des ggf. aufzusteckenden Oberteils der Segmente ausgebildet sind und zwischen den Nuten in ihrer Oberfläche mehrere keilförmige Vertiefungen aufweisen, in denen die ggf. aufzusteckenden Oberteile der Segmente beider Lagerkäfige jeweils über eine Rastverbindung formschlüssig axial arretierbar sind. An den stirnseitigen Enden der Basisteile der Käfigsegmente sind die genannten Nuten dabei nur als halbe T-Nuten einseitig in die Stirnseiten eingearbeitet, die durch entsprechend ausgebildete Oberteile nach deren Aufstecken ausgefüllt werden und somit eine geschlossene Stoßstelle zum benachbarten Käfigsegment in Umfangsrichtung bilden. Die keilförmigen Vertiefungen in der Oberfläche der Basisteile sind bevorzugt jeweils paarweise zwischen den Nuten axial hintereinander angeordnet und dienen zum Fixieren der Oberteile in zwei Raststellungen. Der Abstand der einzelnen Vertiefungen zueinander ist dabei so gewählt, dass das Oberteil in den ersten Vertiefungen bzw. in der ersten Raststellung zunächst auf dem Basisteil fixiert wird und dabei die Käfigtaschen in den Basisteilen noch nicht überdeckt, während in den zweiten Vertiefungen bzw. in der zweiten Raststellung die Oberteile in ihrer die Käfigtaschen der Basisteile etwa zur Hälfte überdeckenden Endstellung axial arretiert und die zwischenzeitlich eingefüllten Kugelrollen in ihrem Druckwinkel fixiert werden.

Ausgehend von der zuvor beschriebenen bevorzugten Ausbildung der Basisteile der Käfigsegmente weisen die Oberteile der Käfigsegmente des Lagerkäfigs für die als Kugelrollen ausgebildete Reihe Wälzkörper deshalb nach den Ansprüchen 11 und 12 zum einen an ihrer lagerinnenseitigen Randpartie eine sich über deren gesamte Länge erstreckende Abschrägung auf, die in Montagestellung der Oberteile in die Käfigtaschen der Basisteile hineinragt und die Kugelrollen über deren Seitenflächen in ihrem Druckwinkel fixiert, während zum anderen an der Unterseite ihrer lageraußenseitigen Randpartie mehrere der Anzahl der Nuten in den Basisteilen entsprechende T-Profilförmige Stege angeordnet sind, die zur Lagefixierung des aufzusteckenden Oberteils des Käfigsegments dienen. Die T-profilförmigen Nuten in den Basisteilen der Käfigsegmente dienen somit zur Aufnahme der T-profilförmigen Stege der Oberteile der Käfigsegmente, um beide Teile radial und in Umfangsrichtung zueinander zu fixieren, wobei diese Stege an den stirnseitigen Enden der Oberteile wieder nur als halbe T-Stege einseitig an die Stirnseiten angeformt sind, die in die halben T-Nuten an den Stirnseiten der Basisteile eingreifen. Darüber hinaus weisen die Oberteile der Käfigsegmente gemäß den Ansprüchen 13 und 14 zwischen den Stegen an ihrer Unterseite mehrere aus dieser Unterseite herausragende keilförmige Erhebungen auf, mit denen die Oberteile in den Vertiefungen der Basisteile formschlüssig axial arretierbar sind. In besonders vorteilhafter Weise sind diese keilförmigen Erhebungen dabei am Ende elastisch ausgebildeter Zungen angeordnet sind, die jeweils in zusätzlich in die Segmente eingearbeitete langlochartige Aussparungen hineinragend an eine Seitenwand dieser Aussparungen angeformt sind, da somit das Aufstecken der Oberteile auf die Basisteile der Käfigsegmente innerhalb des relativ schmalen Spaltes zwischen den Basisteilen und dem äußeren Lagerring wesentlich vereinfacht wird.

Durch die Ausbildung der Basisteile und der Oberteile der Käfigsegmente in der beschriebenen Weise ist somit gewährleistet, dass sich einerseits beide Teile als Kunststoffteile mit relativ einfachen Werkzeugen herstellen lassen und dass andererseits die beiden Funktionen "radiales Verbinden" und "axiales Fixieren" der beiden Teile durch zwei getrennte Formschlussverbindungen unabhängig voneinander ausgeführt sind. Das bedeutet, dass radiale Betriebskräfte, die aus der Führung der Kugelrollen durch die Oberteile der Käfigsegmente resultieren und ausschließlich auf die Oberteile der Käfigsegmente wirken, vollständig von den T-profilförmigen Stegen und Nuten an beiden Teilen aufgenommen werden und jegliche Belastung der axialen Rastverbindung beider Teile, die ein eventuelles Aufweiten und Lösen dieser Rastverbindung begünstigen könnte, wirkungsvoll verhindert wird. Ebenso ist es von Vorteil, dass durch die Ausbildung des Kontaktes der Oberteile der Käfigsegmente zu den Seitenflächen der Kugelrollen über die Abschrägung an deren lagerinnenseitigen Randpartie der Druckwinkel dieser Reihe Wälzkörper durch Veränderung des Winkels der Abschrägung in weiten Bereichen variiert werden kann und sich somit Druckwinkel bis ca. 55° realisieren lassen. Darüber hinaus verhindern die Oberteile der Käfigsegmente durch ihre formschlüssige Verbindung mit den Basisteilen auch das Verkippen der Kugelrollen in ihrer Laufbahn, wobei die Stützkräfte der Kugelrollen auf die Basisteile der Käfigsegmente mit übertragen werden und diese sich wiederum axial selbst an der Kugelrollen abstützen. Damit sind sämtliche Käfigsegmente des Lagerkäfigs wälzkörpergeführt und benötigen keine weitere Abstützung an anderen Bauteilen des Axial-Schrägwälzlagers.

Schließlich wird es noch als vorteilhafte Ausgestaltung der erfindungsgemäß ausgebildeten Axial-Schrägwälzlagers durch Anspruch 15 vorgeschlagen, den Abstand zwischen dem äußeren Lagerring und dem inneren Lagerring an beiden Axialseiten des Axial-Schrägwälzlagers nur so groß auszubilden, dass diese im Zusammenwirken mit den beidseitig in diesen Abstand hineinragenden Käfigsegmenten beider Lagerkäfige eine Labyrinthdichtung zur Abdichtung des Lagers gegen von außen eindringende Verschmutzungen und gegen das Austreten von im Lager befindlichem Schmierstoff bilden. Bei der bevorzugten Ausführungsform des erfindungsgemäßen Axial-Schrägwälzlagers mit einer Reihe Lagerkugeln und einer Reihe Kugelrollen gleichen Durchmessers, bei der für die Reihe der als Lagerkugeln ausgebildeten Wälzkörper nur Basisteile für die Käfigsegmente des Lagerkäfigs zur Anwendung kommen, ist der Abstand deshalb an dieser Axialseite kleiner als der Abstand an der Axialseite der Reihe der als Kugelrollen ausgebildeten Wälzkörper, die durch aus Basisteilen und Ober-teilen zusammengesetzte Käfigsegmente geführt werden und dadurch mehr als doppelt so hoch sind. Als vorteilhaft hat es sich daher erwiesen, die Labyrinthdichtung an der Axialseite der Lagerkugeln beispielsweise durch eine zusätzliche einseitige Verlängerung der äußeren Laufbahnschulter am äußeren Lagerring bis auf Höhe der Basisteile zu realisieren, wobei durch das Anordnen zusätzlicher Dichtlippen an den Käfigsegmenten beider Lagerkäfige in Radialrichtung sowie an den Stoßstellen zwischen den einzelnen Käfigsegmenten in Umfangsrichtung die Dichtwirkung noch erheblich gesteigert werden kann. Gleichzeitig werden durch eine solche Spaltausbildung zwischen den Lagerringen auch die Käfigsegmente beider Lagerkäfige in Umfangsrichtung sicher geführt.

Zu einem zweiten Teil wird die Aufgabe der Erfindung auch durch ein erfindungsgemäßes Verfahren zur Montage des beschriebenen Axial-Schrägwälzlagers gelöst, welches nachfolgend beschrieben wird.

Nach diesem Verfahren erfolgt zunächst das Einlegen der Basisteile der Käfigsegmente des Lagerkäfigs für die als Lagerkugeln ausgebildete erste Reihe der Wälzkörper in die erste Laufbahn des äußeren Lagerrings sowie das koaxiales Einlegen des inneren Lagerrings in den äußeren Lagerring soweit, dass die Füllbohrung im inneren Lagerring mit einer ersten Käfigtasche der Basisteile der Segmente fluchtet. In dieser Stellung erfolgt dann das Einfüllen einer ersten Lagerkugel durch die Füllbohrung im inneren Lagerring hindurch in die erste Käfigtasche der Basisteile der Käfigsegmente des Lagerkäfigs. Anschließend wird der innere Lagerring in Umfangsrichtung weitergedreht, bis die Füllbohrung im inneren Lagerring mit einer zweiten Käfigtasche der Basisteile der Käfigsegmente fluchtet, so dass das Einfüllen einer zweiten Lagerkugel durch die Füllbohrung im inneren Lagerring hindurch in die zweite Käfigtasche der Basisteile der Käfigsegmente des Lagerkäfigs erfolgen kann. Die letzten beiden Verfahrensschritte werden nunmehr solange wiederholt, bis alle Käfigtaschen der Basisteile der Käfigsegmente des Lagerkäfigs mit den Wälzkörpern der ersten Reihe befüllt sind.

Zum Befüllen des Axial-Schrägwälzlagers mit der zweiten Reihe der als Kugelrollen ausgebildeten Wälzkörper erfolgt dann ein axiales Einschieben des inneren Lagerrings in den äußeren Lagerring soweit, bis die Wälzkörper der ersten Reihe in der ersten Laufbahn beider Lagerringe anliegen. Daran schließt sich das Einlegen der Basisteile der Käfigsegmente des Lagerkäfigs für die als Kugelrollen ausgebildete Reihe der Wälzkörper in die zweite Laufbahn des äußeren Lagerrings sowie das Ausrichten des inneren Lagerrings derart an, dass die Füllbohrung im inneren Lagerring mit einer ersten Käfigtasche der Basisteile der Käfigsegmente fluchtet. In dieser Stellung erfolgt danach das Einfüllen einer ersten Kugelrolle durch die Füllbohrung im inneren Lagerring hindurch in die erste Käfigtasche der Basisteile der Käfigsegmente des Lagerkäfigs, wobei die Kugelrolle durch den Spalt zwischen dem inneren und den äußeren Lagerring unter Nutzung der Füllschräge an der Füllbohrung und der trapezförmigen Erweiterung der Käfigtaschen in den Basisteilen der Käfigsegmente in die Käfigtasche eingeführt wird. Anschließend wird dann wieder der innere Lagerring in Umfangsrichtung weitergedreht, bis die Füllbohrung im inneren Lagerring mit einer zweiten Käfigtasche der Basisteile der Käfigsegmente fluchtet, so dass das Einfüllen einer zweiten Kugelrolle durch die Füllbohrung im inneren Lagerring hindurch in die zweite Käfigtasche der Basisteile der Käfigsegmente des Lagerkäfigs in der gleichen Art erfolgen kann. Auch hier werden nunmehr die letzten beiden Verfahrensschritte solange wiederholt, bis alle Käfigtaschen der Basisteile der Käfigsegmente des Lagerkäfigs mit den als Kugelrollen ausgebildeten Wälzkörpern der zweiten Reihe befüllt sind.

Danach wird der äußere Lagerring des somit vollständig befüllten Axial-Schrägwälzlagers in eine Drehbewegung mit einer Drehzahl versetzt, bei der sich sämtliche als Kugelrollen ausgebildeten Wälzkörper durch Fliehkraft selbsttätig in ihrer Laufbahn senkrecht aufstehen. In dieser Stellung der Kugelrollen werden anschließend sämtliche Oberteile der Käfigsegmente auf die Basisteile der Käfigsegmente des Lagerkäfigs für die Kugelrollen geschoben und zunächst in ihrer ersten Raststellung auf den Basisteilen axial fixiert. Im Folgenden werden die Oberteile der Käfigsegmente axial noch soweit weiter auf die Basisteile verschoben, bis die Abschrägung an der lagerinnenseitigen Randpartie der Ober-teile auf die gegenüberliegenden Seitenflächen der Kugelrollen auftrifft, die Kugelrollen durch weiters Aufschieben der Oberteile in ihre Druckwinkel verkippen und die Oberteile in ihrer Betriebsstellung in der zweiten Raststellung auf den Basisteilen verrasten. Abschließend erfolgt dann noch ein optionales Befetten des Axial-Schrägwälzlagers durch die Füllbohrung im inneren Lagerring hindurch sowie das Verschließen der Füllbohrung mit dem Kunststoffstopfen.

Eine vorteilhafte Ausgestaltung des erfindungsgemäßen Montageverfahrens ist es darüber hinaus noch, dass die notwendige Vorspannung des Axial-Schrägwälzlagers während des Montageverfahrens durch gezielten axialen und/oder radialen Versatz zwischen den beiden Laufbahnen in den Lagerringen eingestellt wird, wobei Fertigungstoleranzen durch unterschiedliche Paarungen von Lagerringen und verschiedene Sortierungen von Wälzkörpern ausgeglichen werden. Dadurch müssen keine Einzelteile des Axial-Schrägwälzlagers mehr aufwendig zueinander eingeschliffen werden, was bei Wälzlagern im großen Durchmesserbereich auch praktisch nicht mehr durchführbar wäre.

### Kurze Beschreibung der Zeichnungen

Eine bevorzugte Ausführungsform des erfindungsgemäß ausgebildeten Axial-Schrägwälzlagers wird nachfolgend unter Bezugnahme auf die beigefügten Zeichnungen näher erläutert. Dabei zeigen:
- Figur 1: eine Seitenansicht eines erfindungsgemäß ausgebildeten zweireihigen Axial-Schrägwälzlagers in verkleinertem Maßstab;
- Figur 2: den Querschnitt A - A durch das erfindungsgemäß ausgebildete Axial-Schrägwälzlager gemäß Figur 1;
- Figur 3: eine vergrößerte Ansicht der Einzelheit Z des erfindungsgemäß ausgebildeten Axial-Schrägwälzlagers gemäß Figur 2;
- Figur 4: eine vergrößerte Ansicht des Schnittes B - B durch den inneren Lagerring des Axial-Schrägwälzlagers gemäß Figur 1;
- Figur 5: eine vergrößerte Draufsicht auf die Füllbohrung im inneren Lagerring des erfindungsgemäßen Axial-Schrägwälzlagers;
- Figur 6: eine vergrößerte Seitenansicht eines Basisteils der Käfigsegmente des erfindungsgemäßen Axial-Schrägwälzlagers;
- Figur 7: eine vergrößerte Draufsicht auf ein Basisteil der Käfigsegmente des erfindungsgemäßen Axial-Schrägwälzlagers;
- Figur 8: den Schnitt C - C durch das Basisteil der Käfigsegmente des erfindungsgemäßen Axial-Schrägwälzlagers gemäß Figur 6;
- Figur 9: den Schnitt D - D durch das Basisteil der Käfigsegmente des erfindungsgemäßen Axial-Schrägwälzlagers gemäß Figur 6;
- Figur 10: eine vergrößerte Seitenansicht eines Oberteils der Käfigsegmente des erfindungsgemäßen Axial-Schrägwälzlagers;
- Figur 11: eine vergrößerte Draufsicht auf ein Oberteil der Käfigsegmente des erfindungsgemäßen Axial-Schrägwälzlagers;
- Figur 12: den Schnitt E - E durch das Oberteil der Käfigsegmente des erfindungsgemäßen Axial-Schrägwälzlagers gemäß Figur 10;
- Figur 13: den Schnitt F - F durch das Oberteil der Käfigsegmente des erfindungsgemäßen Axial-Schrägwälzlagers gemäß Figur 10;
- Figur 14: eine räumliche Darstellung eines unmontierten Käfigsegments des erfindungsgemäßen Axial-Schrägwälzlagers;
- Figur 15: einen Querschnitt durch ein montiertes Käfigsegment des erfindungsgemäßen Axial-Schrägwälzlagers mit Kugelrolle;
- Figur 16: eine schematische Darstellung des Verfahrensschrittes a) zur Montage des erfindungsgemäßen Axial-Schrägwälzlagers;
- Figur 17: eine schematische Darstellung der Verfahrensschritte b) bis f) zur Montage des erfindungsgemäßen Axial-Schrägwälzlagers;
- Figur 18: eine schematische Darstellung der Verfahrensschritte g) bis m) zur Montage des erfindungsgemäßen Axial-Schrägwälzlagers;
- Figur 19: eine schematische Darstellung der Verfahrensschritte n) bis p) zur Montage des erfindungsgemäßen Axial-Schrägwälzlagers.

### Ausführliche Beschreibung der Zeichnungen

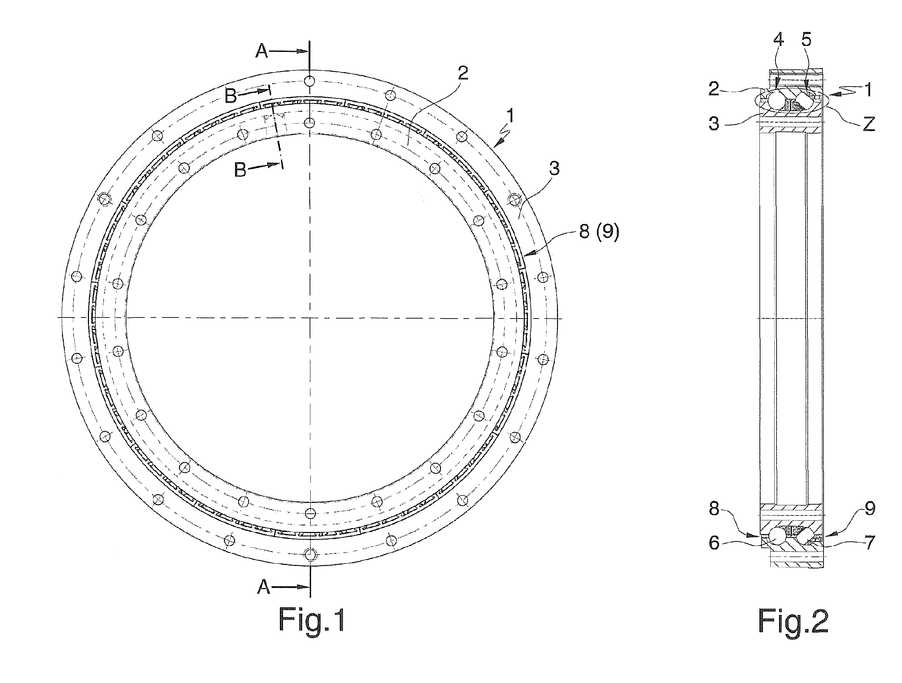

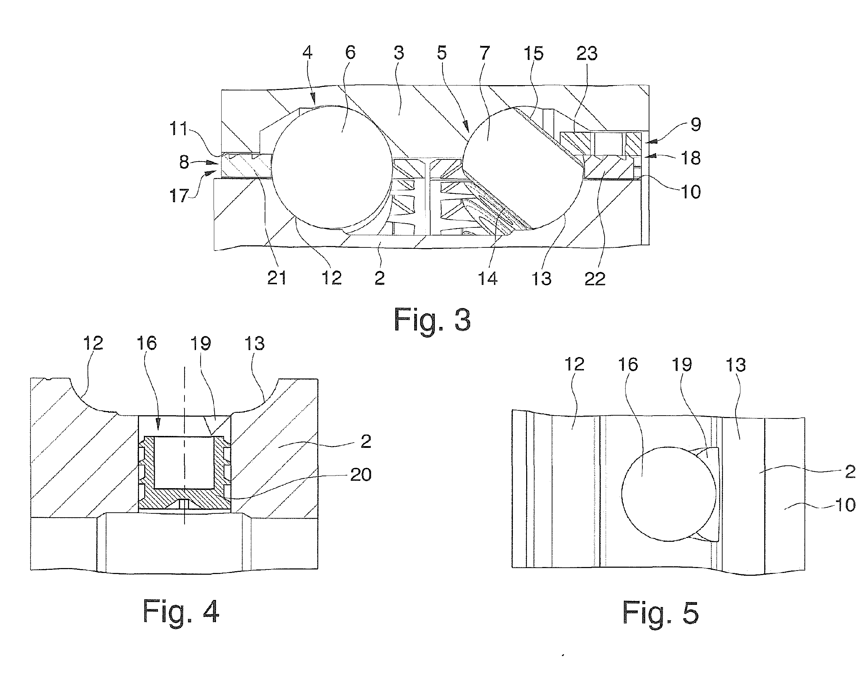

Aus den Figuren 1 und 2 geht jeweils deutlich ein zur Rundtischlagerung an Werkzeugmaschinen geeignetes Axial-Schrägwälzlager 1 hervor, welches im Wesentlichen aus einem einteiligen inneren Lagerring 2 und aus einem einteiligen äußeren Lagerring 3 sowie aus eine Vielzahl zwischen den Lagerringen 2, 3 in zwei Reihen 4, 5 nebeneinander angeordneten Wälzkörpern 6, 7 besteht, die in Umfangsrichtung durch zwei Lagerkäfige 8, 9 in gleichmäßigen Abständen zueinander gehalten werden. In Figur 3 ist dabei zu sehen, dass die beiden Reihen 4, 5 der Wälzkörper 6, 7 in O-Anordnung gegeneinander angestellt sind und unter definierten Druckwinkeln mit ihren Laufflächen auf zwei nebeneinander an der Außenseite 10 des inneren Lagerrings 2 und an der Innenseite 11 des äußeren Lagerrings 3 angeordneten Laufbahnen 12, 13 abrollen. Die in den Figuren 1 und 2 nicht näher bezeichneten Bohrungen im inneren und äußeren Lagerring 2, 3 dienen im Übrigen der Verschraubung des Axial-Schräg-wälzlagers 1 an der Anschlusskonstruktion der Werkzeugmaschine.

Desweiteren ist aus den Figuren 1 und 2 in Verbindung mit den Figuren 3, 4 und 5 ersichtlich, dass bei dem gezeigten Axial-Schrägwälzlager 1 erfindungsgemäß die eine der zwei Reihen 4, 5 der Wälzkörper 6, 7 durch Lagerkugeln gebildet wird, während die andere der zwei Reihen 4, 5 der Wälzkörper 6, 7 aus Kugelrollen besteht, die jeweils zwei symmetrisch von einer Kugelgrundform abgeflachte, parallel zueinander angeordneten Seitenflächen 14, 15 aufweisen und zwischen diesen Seitenflächen mit einer Breite von ca. 70% des Durchmessers ihrer Kugelgrundform ausgebildet sind. Zur verbesserten Aufnahme von statische Lasten, wie das Gewicht des Rundtisches der Werkzeugmaschine, sind dabei in bevorzugter Ausführung die rundtischzugewandte Reihe 4 als Lagerkugeln und die rundtischabgewandte Reihe 5 als Kugelrollen ausgebildet, wobei beide Reihen 4, 5 identische Teilkreisdurchmesser und sämtliche Wälzkörper 6, 7 gleiche Durchmesser aufweisen. Darüber hinaus weist der innere Lagerring 2 erfindungsgemäß eine einzelne, axial außermittig neben einer der Laufbahnen 12, 13 angeordnete, radiale Füllbohrung 16 auf, durch welche sämtliche Wälzkörper 6, 7 der zumindest zwei Reihen 4, 5 in ihre Laufbahnen 12, 13 einfüllbar sind und gleichzeitig werden die Lagerkäfige 8, 9 der beiden Reihen 4, 5 der Wälzkörper 6, 7 erfindungsgemäß durch jeweils aus mehreren aneinander gereihten, gleichartigen Käfigsegmenten 17, 18 bestehende Segmentkäfige gebildet.

In den Figuren 4 und 5 ist dabei erkennbar, dass die radiale Füllbohrung 16 im inneren Lagerring 2 unmittelbar neben der Laufbahn 13 der als Kugelrollen ausgebildeten Reihe 5 Wälzkörper 7 angeordnet ist und an ihrer innenringaußenseitigen Mündung einseitig mit einer zu dieser Laufbahn 13 gerichteten, phasenartigen Füllschräge 19 zum erleichterten Einfüllen der Kugelrollen ausgebildet ist. Deutlich sichtbar ist dabei der innere Lagerring 2 zwischen den beiden Laufbahnen 12, 13 für die Wälzkörper 6, 7 bis zum Laufbahngrund abgesetzt sowie eben ausgebildet, um bei der Lagermontage bei einer einseitig bereits mit Wälzkörpern 6 befüllten Laufbahn 12 noch ein axiales Verschieben des inneren Lagerrings 3 zu ermöglichen. Darüber hinaus weist die radiale Füllbohrung 16 im inneren Lagerring 2 einen geringfügig größeren Durchmesser als die Wälzkörper 6, 7 auf, um das Einfüllen der Wälzkörper 5, 7 durch diese Füllbohrung 16 zu ermöglichen. Nach dem Einfüllen aller Wälzkörper 6, 7 wird die radiale Füllbohrung 16 dann, wie in Figur 4 dargestellt, an ihrer innenringinnenseitigen Mündung bevorzugt durch einen einfachen, hohl ausgebildeten Kunststoffstopfen 20 verschlossen und kann als zusätzliches Schmierstoffreservoir des Axial-Schrägwälzlagers 1 genutzt werden.

Weiterhin ist in Figur 3 zu sehen, dass die einzelnen Käfigsegmente 17, 18 der Lagerkäfige 8, 9 beider Reihen 4, 5 der Wälzkörper 6, 7 jeweils aus gleichartigen Basisteilen 21, 22 bestehen und dass die Käfigsegmente 18 des Lagerkäfigs 9 für die als Kugelrollen ausgebildete Reihe 5 der Wälzkörper 7 zusätzlich jeweils ein zweites, auf das Basisteil 22 aufsteckbares Oberteil 23 aufweisen. Der Abstand zwischen den Lagerringen 2, 3 ist dabei an beiden Axialseiten des Axial-Schrägwälzlagers 1 nur so groß ist, dass dieser im Zusammenwirken mit den Käfigsegmenten 17, 18 beider Lagerkäfige 8, 9 jeweils eine Labyrinthdichtung gegen von außen eindringende Verschmutzungen und gegen das Austreten von im Lager befindlichem Schmierstoff bilden.

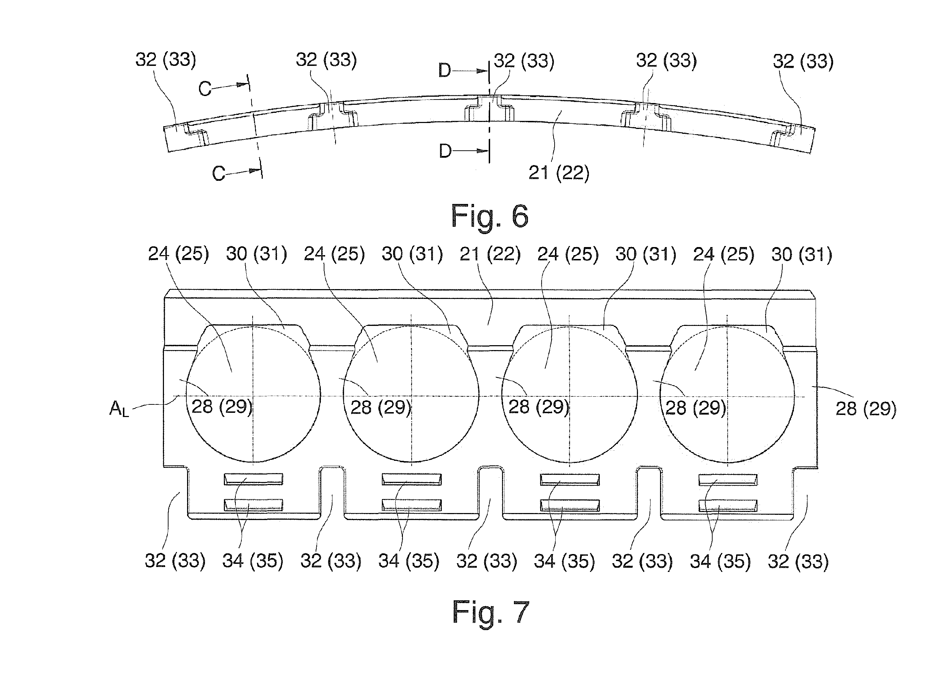

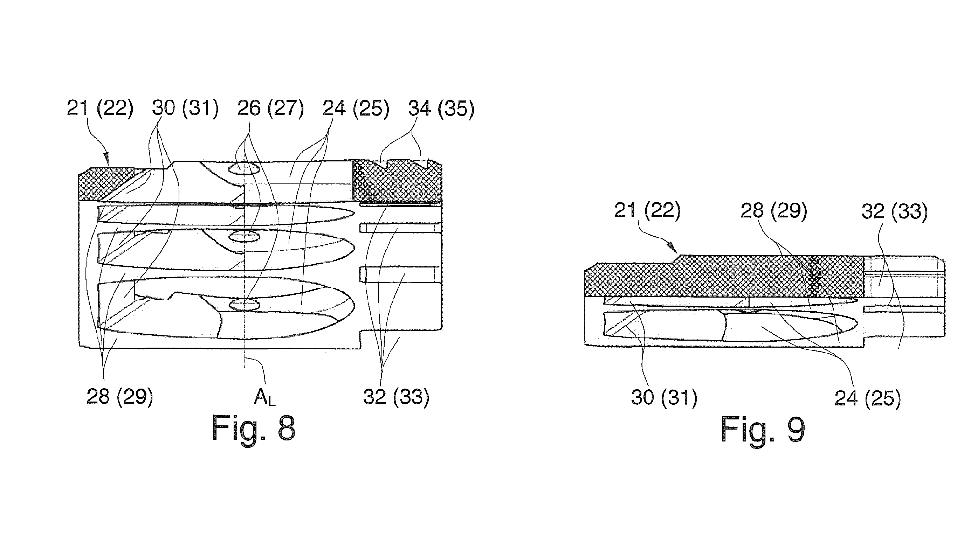

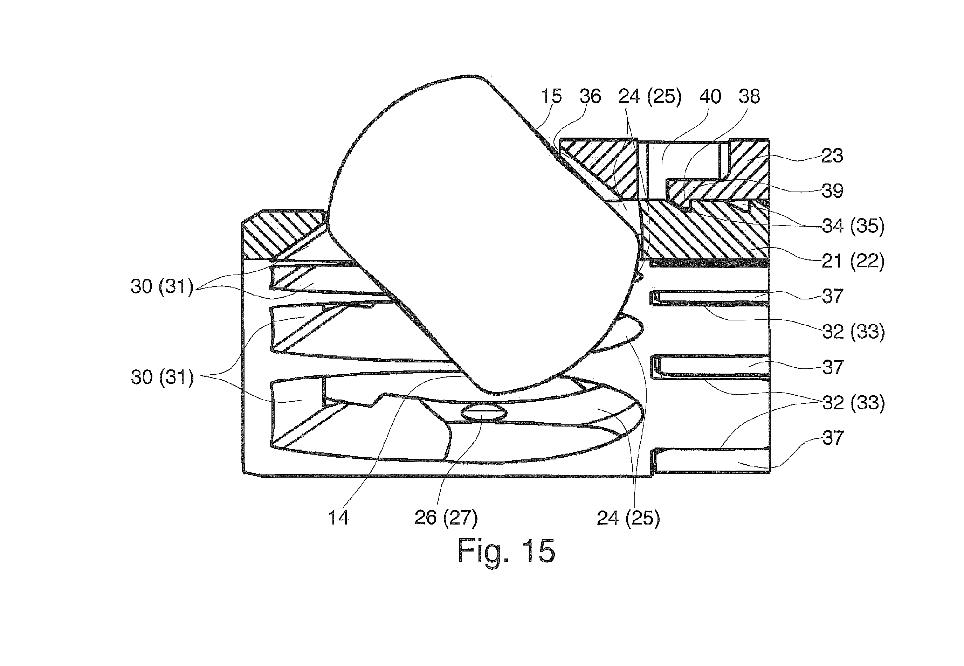

Die Figuren 7 und 8 zeigen desweiteren, dass die Basisteile 21, 22 der Käfigsegmente 17, 18 beider Lagerkäfige 8, 9 beispielhaft mit jeweils vier kreisrunden, dem Durchmesser der Wälzkörper 6, 7 entsprechenden Käfigtaschen 24, 25 ausgebildet sind, die, wie auch in Figur 15 zu sehen ist, an ihren Innenseiten in Umlaufrichtung in Höhe der Taschenlängsachse A_{L} zusätzlich konkave Anlaufflächen 26, 27 für die Wälzkörper 6, 7 aufweisen. Ebenso ist aus den Figuren 7, 8, 9 und 14 ersichtlich, dass die Käfigtaschen 24, 25 in den Basisteilen 21, 22 der Käfigsegmente 17, 18 an ihrer der Füllbohrung 16 im inneren Lagerring 2 zugewandten Durchmesserhälfte jeweils eine trapezförmige, parallel zur Taschenlängsachse A_{L} verlaufende Erweiterung 30, 31 aufweisen, die ebenfalls dem erleichterten Einfüllen der als Kugelrollen ausgebildeten Wälzkörper 7 bei der Lagermontage dient. Darüber hinaus sind die Basisteile 21, 22 der Käfigsegmente 17, 18, wie in den Figuren 6 bis 9 dargestellt, an ihrer lageraußenseitigen Randpartie jeweils in Höhe der zwischen den Käfigtaschen 24, 25 gebildeten Taschenstege 28, 29 mit mehreren T-profilförmigen Nuten 32, 33 ausgebildet, in denen das ggf. aufzusteckende Oberteil 23 der Käfigsegmente 17, 18 radial und in Umfangsrichtung lagefixierbar ist. Die axiale Arretierung der Oberteile 23 der Käfigsegmente 17, 18 beider Lagerkäfige 8, 9 erfolgt dann über mehrere zwischen den Nuten 32, 33 in die in Oberfläche der Basisteile 21, 22 der Käfigsegmente 17, 18 beider Lagerkäfige 8, 9 eingeformte und in den Figuren 7, 8 und 14 deutlich sichtbare keilförmige Vertiefungen 34, 35, die mit entsprechenden Ausbildungen an den Oberteilen 23 jeweils eine formschlüssige Rastverbindung der in Figur 15 dargestellten Art bilden.

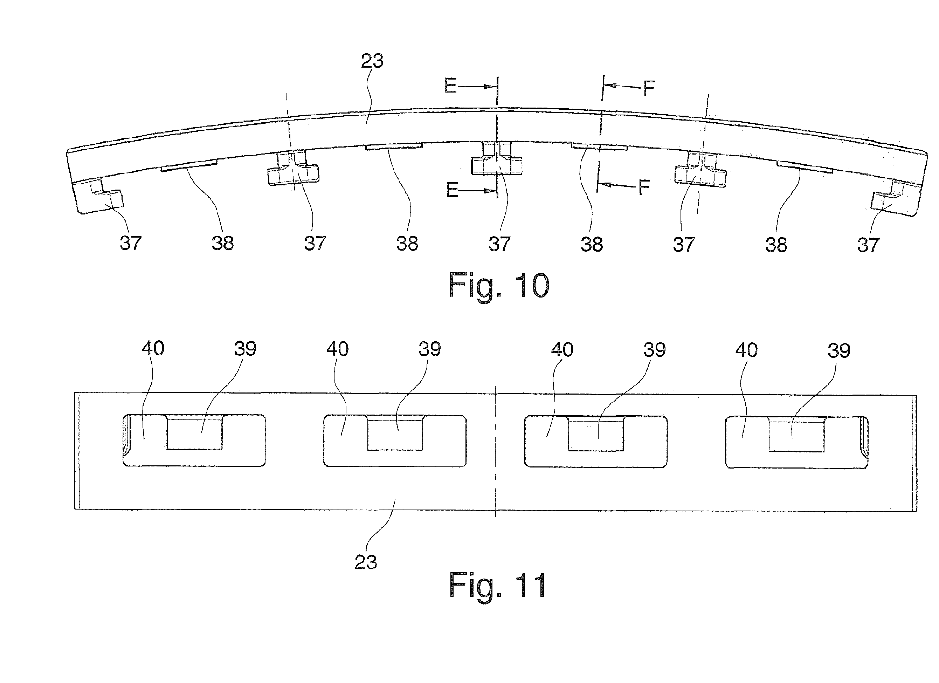

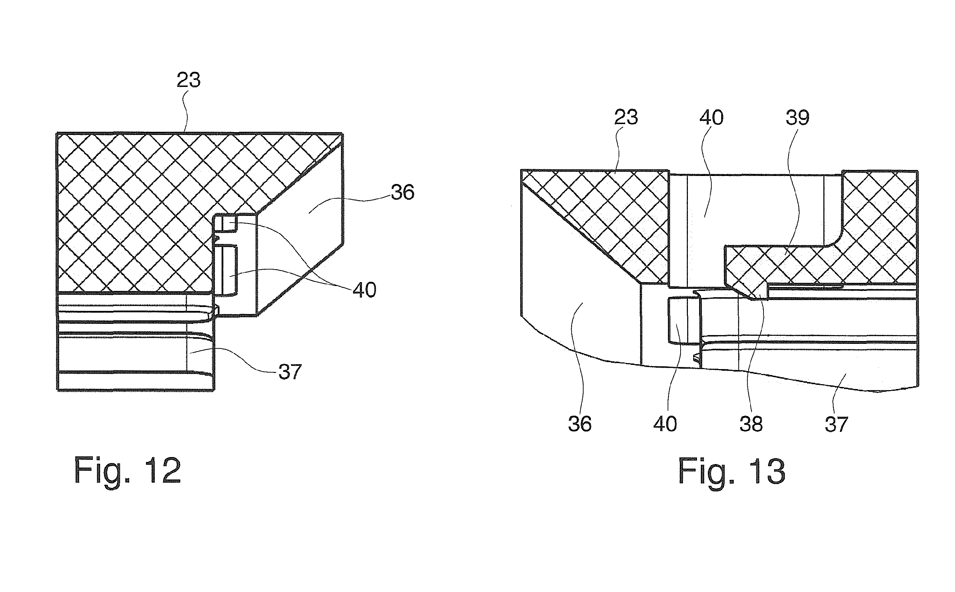

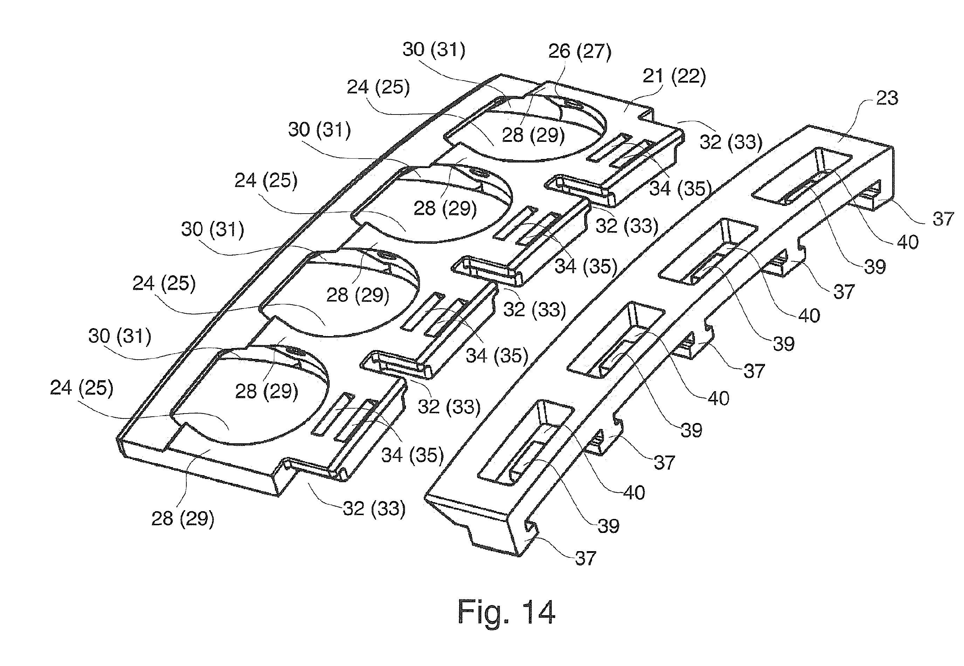

Die weitere Ausbildung der Oberteile 23 der Käfigsegmente 18 des Lagerkäfigs 9 für die als Kugelrollen ausgebildeten Wälzkörper 7 ist in den Figuren 10 bis 14 dargestellt. Die Figuren 12 und 13 zeigen dabei, dass diese Oberteile 23 an ihrer lagerinnenseitigen Randpartie eine sich über deren gesamte Länge erstreckende Abschrägung 36 aufweisen, die in der in Figur 15 abgebildeten Montagestellung der Oberteile 23 in die Käfigtaschen 25 der Basisteile 21, 22 hineinragt und die Kugelrollen über deren Seitenflächen 15 in ihrem Druckwinkel fixiert. Aus den Figuren 10 und 12 geht darüber hinaus hervor, dass die Oberteile 23 der Käfigsegmente 18 des Lagerkäfigs 9 für die als Kugelrollen ausgebildeten Wälzkörper 7 an der Unterseite ihrer lageraußenseitigen Randpartie mehrere der Anzahl der Nuten 32, 33 in den Basisteilen 21, 22 entsprechende T-Profilförmige Stege 37 aufweisen, die zur Lagefixierung des aufzusteckenden Oberteils 23 des Käfigsegments 18 in Radial- sowie Umfangsrichtung dienen. Zwischen diesen Stegen 37 weisen die Oberteile 23, wie die Figuren 10, 11 und 13 zeigen, mehrere aus ihrer Unterseite herausragende keilförmige Erhebungen 38 auf, die zusammen mit den keilförmigen Vertiefungen 34, 35 an den Basisteilen 21, 11 die in Figur 15 gezeigte Rastverbindung bilden, mit denen die Oberteile 23 in Axialrichtung formschlüssig arretierbar sind. Dabei sind die keilförmigen Erhebungen 38 an den Unterseiten der Käfigsegmente 18 des Lagerkäfigs 9, wie insbesondere in Figur 13 zu sehen ist, jeweils am Ende elastisch ausgebildeter Zungen 39 angeordnet sind, die jeweils in zusätzlich in die Käfigsegmente 18 eingearbeitete, langlochartige Aussparungen 40, wie sie auch in Figur 14 zu sehen sind, hineinragen und jeweils an eine Seitenwand dieser Aussparungen 40 angeformt sind.

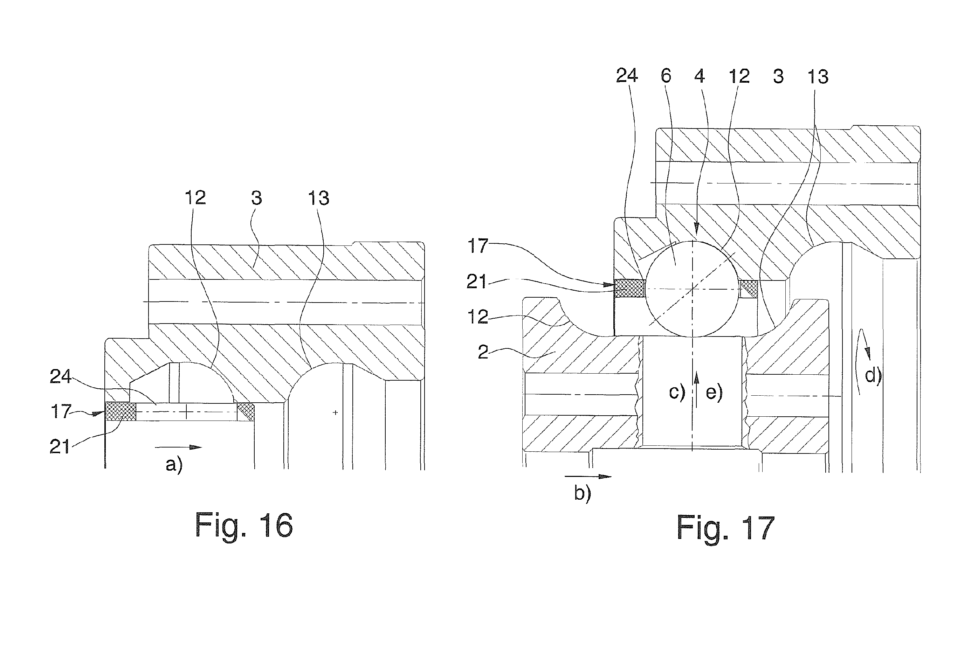

In den Figuren 16 bis 19 ist schließlich noch das Verfahren zur Montage des beschriebenen Axial-Schrägwälzlagers 1 schematisch dargestellt, wobei die einzelnen Verfahrensschritte durch Bewegungspfeile mit zugehörigen anspruchs-gemäßen Aufzählungszeichen verdeutlicht werden. Aus Figur 16 geht dabei hervor, dass das Montageverfahren zunächst mit dem Einlegen der Basisteile 21 der Käfigsegmente 17 des Lagerkäfigs 8 für die als Lagerkugeln ausgebildete erste Reihe 4 der Wälzkörper 6 in die erste Laufbahn 12 des äußeren Lagerrings 3 beginnt (a). Danach erfolgt das in Figur 17 angedeutete koaxiale Einlegen des inneren Lagerrings 2 in den äußeren Lagerring 3 soweit, dass die Füllbohrung 16 im inneren Lagerring 2 mit einer ersten Käfigtasche 24 der Basisteile 21 der Käfigsegmente 17 fluchtet (b). In dieser Stellung erfolgt das Einfüllen einer ersten Lagerkugel durch die Füllbohrung 16 im inneren Lagerring 2 hindurch in die erste Käfigtasche 24 der Basisteile 21 der Käfigsegmente 17 des Lagerkäfigs 8 (c). Anschließend wird der innere Lagerring 2, wie weiter in Figur 17 angedeutet ist, in Umfangsrichtung weitergedreht, bis die Füllbohrung 16 im inneren Lagerring 2 mit einer zweiten Käfigtasche 24 der Basisteile 21 der Käfigsegmente 17 fluchtet (d), so dass das Einfüllen einer zweiten Lagerkugel durch die Füllbohrung 16 im inneren Lagerring 2 hindurch in die zweite Käfigtasche 24 der Basisteile 21 der Käfigsegmente 17 des Lagerkäfigs 8 erfolgen kann (e). Die letzten beiden Verfahrensschritte werden nunmehr solange wiederholt, bis alle Käfigtaschen 24 der Basisteile 21 der Käfigsegmente 17 des Lagerkäfigs 8 mit den Wälzkörpern 6 der ersten Reihe 4 befüllt sind.

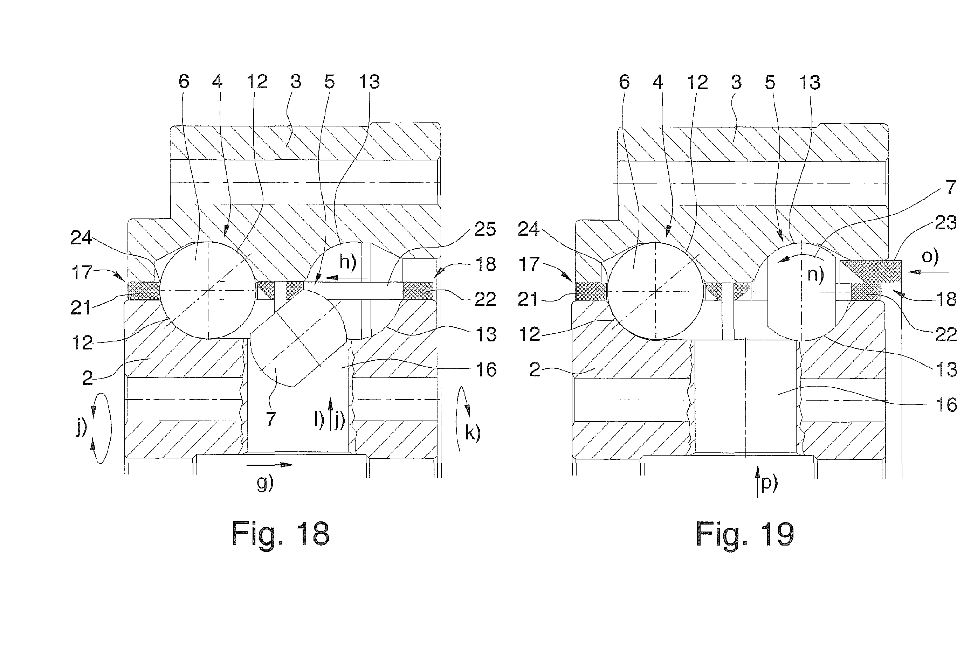

Zum Befüllen des Axial-Schrägwälzlagers 1 mit der zweiten Reihe 5 der als Kugelrollen ausgebildeten Wälzkörper 7 erfolgt dann ein in Figur 18 angedeutetes axiales Einschieben des inneren Lagerrings 2 in den äußeren Lagerring 3 soweit, bis die Wälzkörper 6 der ersten Reihe 4 in der ersten Laufbahn 12 beider Lagerringe 2, 3 anliegen (g). Daran schließt sich das Einlegen der Basisteile 22 der Käfigsegmente 18 des Lagerkäfigs 9 für die als Kugelrollen ausgebildete Reihe 5 der Wälzkörper 7 in die zweite Laufbahn 13 des äußeren Lagerrings 3 (h) sowie das Ausrichten des inneren Lagerrings 2 derart an, dass die Füllbohrung 16 im inneren Lagerring 2 seitlich mit einer ersten Käfigtasche 25 der Basisteile 22 der Käfigsegmente 18 fluchtet (i). In dieser Stellung erfolgt danach das ebenfalls in Figur 18 angedeutete Einfüllen einer ersten Kugelrolle durch die Füllbohrung 16 im inneren Lagerring 2 hindurch in die erste Käfigtasche 25 der Basisteile 22 der Käfigsegmente 18 des Lagerkäfigs 9 (j), wobei die Kugelrolle durch den Spalt zwischen dem inneren Lagerring 2 und den äußeren Lagerring 3 unter Nutzung der Füllschräge 19 an der Füllbohrung 16 und der trapezförmigen Erweiterung 31 der Käfigtaschen 25 in den Basisteilen 22 der Käfigsegmente 18 in die Käfigtasche 25 eingeführt wird. Anschließend wird dann wieder der innere Lagerring 2 in Umfangsrichtung weitergedreht, bis die Füllbohrung 16 inneren Lagerring 2 mit einer zweiten Käfigtasche 25 der Basisteile 22 der Käfigsegmente 18 fluchtet (k), so dass das Einfüllen einer zweiten Kugelrolle durch die Füllbohrung 16 im inneren Lagerring 2 hindurch in die zweite Käfigtasche 25 der Basisteile 22 der Käfigsegmente 18 des Lagerkäfigs 9 in der gleichen Art erfolgen kann (I). Auch hier werden nunmehr die beiden letztgenannten Verfahrensschritte solange wiederholt, bis alle Käfigtaschen 25 der Basisteile 22 der Käfigsegmente 18 des Lagerkäfigs 9 mit den als Kugelrollen ausgebildeten Wälzkörpern 7 der zweiten Reihe 5 befüllt sind.

Danach wird der äußere Lagerring 3 des somit vollständig befüllten Axial-Schrägwälzlagers 1 in eine Drehbewegung mit einer Drehzahl versetzt, bei der sich sämtliche als Kugelrollen ausgebildeten Wälzkörper 7, wie in Figur 19 dargestellt, durch Fliehkraft selbsttätig in ihrer Laufbahn 13 senkrecht aufstellen (n). In dieser Stellung der Kugelrollen werden anschließend sämtliche Oberteile 23 der Käfigsegmente 18 auf die Basisteile 22 der Käfigsegmente 18 des Lagerkäfigs 9 für die Kugelrollen geschoben und zunächst in ihrer ersten Raststellung auf den Basisteilen 22 axial fixiert (o). Im Folgenden werden die Oberteile 23 der Käfigsegmente 18 axial noch soweit weiter auf die Basisteile 22 verschoben, bis die Abschrägungen 36 an den Oberteilen 23 auf die gegenüberliegenden Seitenflächen 15 der Kugelrollen auftreffen, die Kugelrollen durch weiteres Aufschieben der Oberteile 23, wie in Figur 15 ersichtlich, in ihre Druckwinkel verkippen und die Oberteile 23 in ihrer Betriebsstellung in der zweiten Raststellung auf den Basisteilen 22 verrasten. Abschließend erfolgt dann noch ein optionales Befetten des Axial-Schrägwälzlagers 1 durch die Füllbohrung 16 im inneren Lagerring 2 hindurch sowie das Verschließen der Füllbohrung 16 mit dem Kunststoffstopfen 20. Die notwendige Vorspannung des Axial-Schrägwälzlagers 1 wird darüber hinaus während des Montageverfahrens durch gezielten axialen und/oder radialen Versatz zwischen den beiden Laufbahnen 12, 13 in den Lagerringen 2, 3 eingestellt wird, wobei Fertigungstoleranzen durch unterschiedliche Paarungen von Lagerringen 2, 3 und verschiedene Sortierungen von Wälzkörpern 6, 7 ausgeglichen werden.

### Bezugszahlenliste

- 1: Axial-Schrägwälzlager
- 2: innerer Lagerring
- 3: äußerer Lagerring
- 4: Reihe
- 5: Reihe
- 6: Wälzkörper von 4
- 7: Wälzkörper von 5
- 8: Lagerkäfig von 4
- 9: Lagerkäfig von 5
- 10: Außenseite von 2
- 11: Innenseite von 3
- 12: Laufbahn von 6
- 13: Laufbahn von 7
- 14: Seitenfläche von 7
- 15: Seitenfläche von 7
- 16: Füllbohrung in 2
- 17: Käfigsegmente von 8
- 18: Käfigsegmente von 9
- 19: Füllschräge an 16
- 20: Kunststoffstopfen
- 21: Basisteil von 17
- 22: Basisteil von 18
- 23: Oberteil von 18
- 24: Käfigtaschen in 21
- 25: Käfigtaschen in 22
- 26: Anlaufflächen in 24
- 27: Anlaufflächen in 25
- 28: Erweiterung von 24
- 29: Erweiterung von 25
- 30: Taschenstege in 21
- 31: Taschenstege in 22
- 32: Nuten in 21
- 33: Nuten in 22
- 34: Vertiefungen in 21
- 35: Vertiefungen in 22
- 36: Abschrägung an 23
- 37: Stege an 23
- 38: Erhebungen an 23
- 39: Zungen für 38
- 40: Aussparungen in 23
- A_{L}: Taschenlängsachse

## Patentansprüche

1. Axial-Schrägwälzlager (1), insbesondere zur Rundtischlagerung an Werkzeugmaschinen, im Wesentlichen bestehend aus einem einteiligen inneren Lagerring (2) und aus einem einteiligen äußeren Lagerring (3) sowie aus einer Vielzahl zwischen den Lagerringen (2, 3) in zumindest zwei gegenein-ander angestellten Reihen (4, 5) nebeneinander angeordneten Wälzkörpern (6, 7), die in Umfangsrichtung durch zumindest zwei Lagerkäfige (8, 9) in gleichmäßigen Abständen zueinander gehalten werden und unter definierten Druckwinkeln mit ihren Laufflächen auf zumindest zwei nebeneinander an der Außenseite (10) des inneren Lagerrings (2) und an der Innenseite (11) des äußeren Lagerrings (3) angeordneten Laufbahnen (12, 13) abrollen, **dadurch gekennzeichnet, dass** die eine der zumindest zwei Reihen (4, 5) der Wälzkörper (6, 7) durch Lagerkugeln gebildet wird, während die andere der zumindest zwei Reihen (4, 5) der Wälzkörper (6, 7) aus Kugelrollen mit jeweils zwei symmetrisch von einer Kugelgrundform abgeflachten, parallel zueinander angeordneten Seitenflächen (14, 15) besteht, wobei der innere Lagerring (2) eine einzelne, axial außermittig neben einer der Laufbahnen (12, 13) angeordnete, radiale Füllbohrung (16) aufweist, durch welche sämtliche Wälzkörper (6, 7) der zumindest zwei Reihen (4, 5) in ihre Laufbahnen (12, 13) einfüllbar sind und dass die Lagerkäfige (8, 9) der zumindest zwei Reihen (4, 5) der Wälzkörper (6, 7) jeweils als aus mehreren aneinander gereihten, gleichartigen Käfigsegmenten (17, 18) bestehende Segmentkäfige ausgebildet sind.

2. Axial-Schrägwälzlager (1) nach Anspruch 1, **dadurch gekennzeichnet, dass** es bevorzugt zwei in O-Anordnung gegeneinander angestellte Reihen (4, 5) Wälzkörper (6, 7) aufweist, von denen die rundtischzugewandte Reihe (4) als Lagerkugeln und die rundtischabgewandte Reihe (5) als Kugelrollen ausgebildet sind, wobei beide Reihen (4, 5) bevorzugt identische Teilkreisdurch-messer und sämtliche Wälzkörper (6, 7) gleiche Durchmesser aufweisen.

3. Axial-Schrägwälzlager (1) nach Anspruch 2, **dadurch gekennzeichnet, dass** die radiale Füllbohrung (16) im inneren Lagerring (2) unmittelbar neben der Laufbahn (13) der als Kugelrollen ausgebildeten Reihe (5) Wälzkörper (7) angeordnet ist und an ihrer innenringaußenseitigen Mündung einseitig mit einer zu dieser Laufbahn (13) gerichteten, phasenartigen Füllschräge (19) zum erleichterten Einfüllen der Kugelrollen ausgebildet ist.

4. Axial-Schrägwälzlager (1) nach Anspruch 3, **dadurch gekennzeichnet, dass** die einen geringfügig größeren Durchmesser als die Wälzkörper (6, 7) aufweisende radiale Füllbohrung (16) im inneren Lagerring (2) an ihrer innenringinnenseitigen Mündung bevorzugt durch einen hohl ausgebildeten Kunststoffstopfen (20) verschließbar und als zusätzliches Schmierstoffreservoir des Axial-Schrägwälzlagers (1) vorgesehen ist.

5. Axial-Schrägwälzlager (1) nach Anspruch 3, **dadurch gekennzeichnet, dass** die einen geringfügig größeren Durchmesser als die Wälzkörper (6, 7) aufweisende radiale Füllbohrung (16) im inneren Lagerring (2) zur Aufnahme einer zusätzlichen Sensorik für ein Temperatur-, Verschleiß-, Last- oder Drehzahlüberwachungssystem oder zur Aufnahme eines zusätzlichen Feststellgliedes für statische Betriebszustände vorgesehen ist.

6. Axial-Schrägwälzlager (1) nach Anspruch 2, **dadurch gekennzeichnet, dass** die einzelnen Käfigsegmente (17, 18) der Lagerkäfige (8, 9) beider Reihen (4, 5) der Wälzkörper (6, 7) jeweils aus gleichartigen Basisteilen (21, 22) bestehen und zumindest die Käfigsegmente (18) des Lagerkäfigs (9) für die als Kugelrollen ausgebildete Reihe (5) der Wälzkörper (7) zusätzlich jeweils ein zweites, auf das Basisteil (22) aufsteckbares Oberteil (23) aufweisen.

7. Axial-Schrägwälzlager (1) nach Anspruch 6, **dadurch gekennzeichnet, dass** die Basisteile (21, 22) der Käfigsegmente (17, 18) beider Lagerkäfige (8, 9) jeweils mit zwei oder mehr kreisrunden, dem Durchmesser der Wälzkörper (6, 7) entsprechenden Käfigtaschen (24, 25) ausgebildet sind, die an ihren Innenseiten in Umlaufrichtung in Höhe der Taschenlängsachse (A_{L}) zusätzlich konkave Anlaufflächen (26, 27) für die Wälzkörper (6, 7) aufweisen.

8. Axial-Schrägwälzlager (1) nach Anspruch 7, **dadurch gekennzeichnet, dass** die Käfigtaschen (24, 25) in den Basisteilen (21, 22) der Käfigsegmente (17, 18) an ihrer der Füllbohrung (16) im inneren Lagerring (2) zugewandten Durchmesserhälfte jeweils eine trapezförmige, parallel zu Taschenlängsachse (A_{L}) verlaufende Erweiterung (28, 29) zum erleichterten Einfüllen der als Kugelrollen ausgebildeten Wälzkörper (7) aufweisen.

9. Axial-Schrägwälzlager (1) nach Anspruch 8, **dadurch gekennzeichnet, dass** die Basisteile (21, 22) der Käfigsegmente (17, 18) beider Lagerkäfige (8, 9) an ihrer lageraußenseitigen Randpartie jeweils in Höhe der zwischen den Käfigtaschen (24, 25) gebildeten Taschenstege (30, 31) mit mehreren T-profilförmigen Nuten (32, 33) zur Lagefixierung des ggf. aufzusteckenden Oberteils (23) der Käfigsegmente (17, 18) ausgebildet sind.

10. Axial-Schrägwälzlager (1) nach Anspruch 9, **dadurch gekennzeichnet, dass** die Basisteile (21, 22) der Käfigsegmente (17, 18) beider Lagerkäfige (8, 9) zwischen den Nuten (32, 33) in ihrer Oberfläche mehrere keilförmige Vertiefungen (34, 35) aufweisen, in denen die ggf. aufzusteckenden Oberteile (23) der Käfigsegmente (17, 18) beider Lagerkäfige (8, 9) jeweils über eine Rastverbindung formschlüssig axial arretierbar sind.

11. Axial-Schrägwälzlager (1) nach Anspruch 6, **dadurch gekennzeichnet, dass** die Oberteile (23) der Käfigsegmente (18) des Lagerkäfigs (9) für die als Kugelrollen ausgebildeten Wälzkörper (7) an ihrer lagerinnenseitigen Randpartie eine sich über deren gesamte Länge erstreckende Abschrägung (36) aufweisen, die in Montagestellung in die Käfigtaschen (25) hineinragt und die Kugelrollen über deren Seitenflächen (15) in ihrem Druckwinkel fixiert.

12. Axial-Schrägwälzlager (1) nach Anspruch 11, **dadurch gekennzeichnet, dass** die Oberteile (23) der Käfigsegmente (18) des Lagerkäfigs (9) für die als Kugelrollen ausgebildeten Wälzkörper (7) an der Unterseite ihrer lageraußenseitigen Randpartie mehrere der Anzahl der Nuten (32, 33) in den Basisteilen (21, 22) entsprechende T-Profilförmige Stege (37) zur Lagefixierung des aufzusteckenden Oberteils (23) des Käfigsegments (18) aufweisen.

13. Axial-Schrägwälzlager (1) nach Anspruch 12, **dadurch gekennzeichnet, dass** die Oberteile (23) der Käfigsegmente (18) des Lagerkäfigs (9) für die als Kugelrollen ausgebildeten Wälzkörper (7) zwischen den Stegen (37) an ihrer Unterseite mehrere aus dieser Unterseite herausragende keilförmige Erhebungen (38) aufweisen, mit denen die Oberteile (23) in den Vertiefungen (35) der Basisteile (22) formschlüssig axial arretierbar sind.

14. Axial-Schrägwälzlager (1) nach Anspruch 13, **dadurch gekennzeichnet, dass** die keilförmigen Erhebungen (38) an den Unterseiten der Käfigsegmente (18) des Lagerkäfigs (9) bevorzugt am Ende elastisch ausgebildeter Zungen (39) angeordnet sind, die jeweils in zusätzlich in die Käfigsegmente (18) eingearbeitete langlochartige Aussparungen (40) hineinragend an eine Seitenwand dieser Aussparungen (40) angeformt sind.

15. Axial-Schrägwälzlager (1) nach Anspruch 6, **dadurch gekennzeichnet, dass** der Abstand zwischen den Lagerringen (2, 3) an beiden Axialseiten des Axial-Schrägwälzlagers (1) nur so groß ist, dass dieser im Zusammenwirken mit den Käfigsegmenten (17, 18) beider Lagerkäfige (8, 9) jeweils eine Labyrinthdichtung gegen von außen eindringende Verschmutzungen und gegen das Austreten von im Lager befindlichem Schmierstoff bilden.

16. Verfahren zur Montage eines Axial-Schrägwälzlagers (1) mit den Merkmalen der Ansprüche 1 bis 15, **gekennzeichnet durch** folgende Schritte:
a) Einlegen der Basisteile (21) der Käfigsegmente (17) des Lagerkäfigs (8) für die als Lagerkugeln ausgebildete erste Reihe (4) der Wälzkörper (6) in die erste Laufbahn (12) des äußeren Lagerrings (3);
b) koaxiales Einlegen des inneren Lagerrings (2) in den äußeren Lagerring (3) soweit, dass die Füllbohrung (16) im inneren Lagerring (2) mit einer ersten Käfigtasche (24) der Basisteile (21) fluchtet;
c) Einfüllen einer ersten Lagerkugel **durch** die Füllbohrung (16) im inneren Lagerring (2) hindurch in die erste Käfigtasche (24) der Basisteile (21) der Käfigsegmente (17) des Lagerkäfigs (8);
d) Weiterdrehen des inneren Lagerrings (2) in Umfangsrichtung, bis die Füllbohrung (16) im inneren Lagerring (2) mit einer zweiten Käfigtasche (24) der Basisteile (21) der Käfigsegmente (17) fluchtet;
e) Einfüllen einer zweiten Lagerkugel **durch** die Füllbohrung (16) im inneren Lagerring (2) hindurch in die zweite Käfigtasche (24) der Basisteile (21) der Käfigsegmente (17) des Lagerkäfigs (8);
f) Wiederholung der Verfahrensschritte d) und e) bis alle Käfigtaschen (24) der Basisteile (21) der Käfigsegmente (17) des Lagerkäfigs (8) mit den Wälzkörpern (6) der ersten Reihe (4) befüllt sind;
g) axiales Einschieben des inneren Lagerrings (2) in den äußeren Lagerring (3) soweit, bis die Wälzkörper (6) der ersten Reihe (4) in der ersten Laufbahn (12) beider Lagerringe (2, 3) anliegen;
h) Einlegen der Basisteile (22) der Käfigsegmente (18) des Lagerkäfigs (9) für die als Kugelrollen ausgebildete Reihe (5) der Wälzkörper (7) in die zweite Laufbahn (13) des äußeren Lagerrings (3);
i) Ausrichten des inneren Lagerrings (2) derart, dass die Füllbohrung (16) im inneren Lagerring (2) seitlich mit einer ersten Käfigtasche (25) der Basisteile (22) der Käfigsegmente (18) fluchtet;
j) Einfüllen einer ersten Kugelrolle **durch** die Füllbohrung (16) im inneren Lagerring (2) hindurch in die erste Käfigtasche (25) der Basisteile (22) der Käfigsegmente (18) des Lagerkäfigs (9);
k) Weiterdrehen des inneren Lagerrings (2) in Umfangsrichtung, bis die Füllbohrung (16) im inneren Lagerring (2) mit einer zweiten Käfigtasche (25) der Basisteile (22) der Käfigsegmente (18) fluchtet;
l) Einfüllen einer zweiten Kugelrolle **durch** die Füllbohrung (16) im inneren Lagerring (2) hindurch in die zweite Käfigtasche (25) der Basisteile (22) der Käfigsegmente (18) des Lagerkäfigs (9);
m) Wiederholung der Verfahrensschritte k) und I) bis alle Käfigtaschen (25) der Basisteile (22) der Käfigsegmente (18) des Lagerkäfigs (9) mit den Wälzkörpern (7) der zweiten Reihe (5) befüllt sind;
n) Versetzen des äußeren Lagerrings (3) in eine Drehbewegung mit einer Drehzahl, bei der sich die als Kugelrollen ausgebildeten Wälzkörper (7) durch Fliehkraft selbsttätig in ihrer Laufbahn (13) senkrecht aufstellen;
o) Aufschieben der Oberteile (23) auf die Basisteile (22) der Käfigsegmente (18) des Lagerkäfigs (9) bei gleichzeitigem Verkippen der Kugelrollen in ihren Druckwinkel und Verrasten der Oberteile (23) in Betriebsstellung;
p) optionales Befetten des Axial-Schrägwälzlagers (1) **durch** die Füllbohrung (16) im inneren Lagerring (2) hindurch und Verschließen der Füllbohrung (16) mit dem Kunststoffstopfen (20).

17. Verfahren nach Anspruch 16, **dadurch gekennzeichnet, dass** die notwendige Vorspannung des Axial-Schrägwälzlagers (1) durch gezielten axialen und/oder radialen Versatz zwischen den beiden Laufbahnen (12, 13) in den Lagerringen (2, 3) eingestellt wird, wobei Fertigungstoleranzen durch unterschiedliche Paarungen von Lagerringen (2, 3) und verschiedene Sortierungen von Wälzkörpern (6, 7) ausgleichbar sind.

## Claims

1. Axial angular-contact rolling bearing (1), in particular for rotary table mounting on machine tools, essentially consisting of a one-part inner bearing ring (2) and of a one-part outer bearing ring (3) and also of a multiplicity of rolling bodies (6, 7) which are arranged next to one another in at least two mutually adjusted rows (4, 5) between the bearing rings (2, 3) and which are held at uniform distances from one another in the circumferential direction by at least two bearing cages (8, 9) and roll their running surfaces at defined pressure angles on at least two raceways (12, 13) arranged next to one another on the outside (10) of the inner bearing ring (2) and on the inside (11) of the outer bearing ring (3), **characterized in that** one of the at least two rows (4, 5) of rolling bodies (6, 7) is formed by bearing balls, while the other of the at least two rows (4, 5) of rolling bodies (6, 7) consists of spherical rollers, in each case with two side faces (14, 15) flattened symmetrically from a basic spherical shape and arranged parallel to one another, the inner bearing ring (2) having a single radial filling bore (16) which is arranged axially eccentrically next to one of the raceways (12, 13) and by means of which all the rolling bodies (6, 7) of the at least two rows (4, 5) can be introduced into their raceways (12, 13), and **in that** the bearing cages (8, 9) of the at least two rows (4, 5) of rolling bodies (6, 7) are designed in each case as segmental cages consisting of a plurality of identical cage segments (17, 18) lined up with one another.

2. Axial angular-contact rolling bearing (1) according to Claim 1, characterize in that it preferably has two rows (4, 5) of rolling bodies (6, 7), which rows are mutually adjusted in an O-arrangement and of which the row (4) facing the rotary table is designed as bearing balls and the row (5) facing away from the rotary table is designed as spherical rollers, the two rows (4, 5) preferably having identical reference diameters and all the rolling bodies (6, 7) having the same diameters.

3. Axial angular-contact rolling bearing (1) according to Claim 2, **characterized in that** the radial filling bore (16) in the inner bearing ring (2) is arranged directly next to the raceway (13) of the row (5) of rolling bodies (7) which is designed as spherical rollers, and the said radial filling bore is designed on one side, at its mouth on the outside of the inner ring, with a chamferlike filling slope (19), directed towards this raceway (13), for the easier introduction of the spherical rollers.

4. Axial angular-contact rolling bearing (1) according to Claim 3, **characterized in that** the radial filling bore (16) in the inner bearing ring (2), which radial filling bore has a slightly larger diameter than the rolling bodies (6, 7), can be closed at its mouth on the inside of the inner ring preferably by means of a plastic plug (20) of hollow form and is provided as an additional lubricant reservoir of the axial angular-contact rolling bearing (1).

5. Axial angular-contact rolling bearing (1) according to Claim 3, **characterized in that** the radial filling bore (16) in the inner bearing ring (2), which radial filling bore has a slightly larger diameter than the rolling bodies (6, 7), is provided for accommodating additional sensor technology for a temperature, wear, load or rotational-speed monitoring system or for accommodating an additional detection member for static operating stages.

6. Axial angular-contact rolling bearing (1) according to Claim 2, **characterized in that** the individual cage segments (17, 18) of the bearing cages (8, 9) of the two rows (4, 5) of rolling bodies (6, 7) consist in each case of identical basic parts (21, 22), and at least the cage segments (18) of the bearing cage (9) for the row (5) of rolling bodies (7) which is designed as spherical rollers additionally have in each case a second upper part (23) attachable to the basic part (22).

7. Axial angular-contact rolling bearing (1) according to Claim 6, **characterized in that** the basic parts (21, 22) of the cage segments (17, 18) of the two bearing cages (8, 9) are designed in each case with two or more circular cage pockets (24, 25) which correspond to the diameter of the rolling bodies (6, 7) and which on their insides additionally have, level with the pocket longitudinal axis (A_{L}) in the direction of rotation, concave run-on surfaces (26, 27) for the rolling bodies (6, 7).

8. Axial angular-contact rolling bearing (1) according to Claim 7, **characterized in that** the cage pockets (24, 25) in the basic parts (21, 22) of the cage segments (17, 18) have in each case, on their diametral half facing the filling bore (16) in the inner bearing ring (2), a trapezoidal widening (28, 29), running parallel to the pocket longitudinal axis (A_{L}), for the easier introduction of the rolling bodies (7) designed as spherical rollers.

9. Axial angular-contact rolling bearing (1) according to Claim 8, **characterized in that** the basic parts (21, 22) of the cage segments (17, 18) of the two bearing cages (8, 9) are designed on their bearing-outside marginal portion in each case, level with the pocket webs (30, 31) formed between the cage pockets (24, 25), with a plurality of T-profile-shaped grooves (32, 33) for fixing in position the upper part (23) of the cage segments (17, 18) which, if appropriate, is to be attached.

10. Axial angular-contact rolling bearing (1) according to Claim 9, **characterized in that** the basic parts (21, 22) of the cage segments (17, 18) of the two bearing cages (8, 9) have in their surface, between the grooves (32, 33), a plurality of wedge-shaped depressions (34, 35), in which the upper parts (23), to be attached if appropriate, of the cage segments (17, 18) of the two bearing cages (8, 9) can in each case be positively locked axially via a latching connection.

11. Axial angular-contact rolling bearing (1) according to Claim 6, **characterised in that** the upper parts (23) of the cage segments (18) of the bearing cage (9) for the rolling bodies (7) designed as spherical rollers have, on their bearing-inside marginal portion, a bevel (36) which extends over their entire length and which, in the assembly position, projects into the cage pockets (25) and fixes the spherical rollers at their pressure angle via the side faces (15) of the latter.

12. Axial angular-contact rolling bearing (1) according to Claim 11, **characterized in that** the upper parts (23) of the cage segments (18) of the bearing cage (9) for the rolling bodies (7) designed as spherical rollers have, on the underside of their bearing-outside marginal portion, a plurality of T-profile-shaped webs (37), corresponding to the number of grooves (32, 33) in the basic parts (21, 22), for fixing in position the upper part (23), to be attached, of the cage segment (18).

13. Axial angular-contact rolling bearing (1) according to Claim 12, **characterized in that** the upper parts (23) of the cage segments (18) of the bearing cage (9) for the rolling bodies (7) designed as spherical rollers have on their underside, between the webs (37), a plurality of wedge-shaped elevations (38) which project out of this underside and by means of which the upper parts (23) can be positively locked axially in the depressions (35) of the basic parts (22).

14. Axial angular-contact rolling bearing (1) according to Claim 13, **characterized in that** the wedge-shaped elevations (38) on the undersides of the cage segments (18) of the bearing cage (9) are preferably arranged on the end of tongues (39) which are of elastic form and which are each formed, so as to project into slot-like cutouts (40) additionally formed into the cage segments (18), on a side wall of said cutouts (40).

15. Axial angular-contact rolling bearing (1) according to Claim 6, characterize in that the distance between the bearing rings (2, 3) on the two axial sides of the axial angular-contact rolling bearing (1) is only such that the latter, in cooperation with the cage segments (17, 18) of the two bearing cages (8, 9), forms in each case a labyrinth seal against dirt penetrating from outside and against the escape of lubricant located in the bearing.

16. Method for assembling an axial angular-contact rolling bearing (1) having the features of Claims 1 to 15, **characterized by** the following steps:
a) insertion of the basic parts (21) of the cage segments (17) of the bearing cage (8) for the first row (4) of rolling bodies (6) which is designed as bearing balls into the first raceway (12) of the outer bearing ring (3);
b) coaxial insertion of the inner bearing ring (2) into the outer bearing ring (3) to an extent such that the filling bore (16) in the inner bearing ring (2) is aligned with a first cage pocket (24) of the basic parts (21);
c) introduction of a first bearing ball through the filling bore (16) in the inner bearing ring (2) into the first cage pocket (24) of the basic parts (21) of the cage segments (17) of the bearing cage (8);
d) further rotation of the inner bearing ring (2) in the circumferential direction until the filling bore (16) in the inner bearing ring (2) is aligned with a second cage pocket (24) of the basic parts (21) of the cage segments (17);
e) introduction of a second bearing ball through the filling bore (16) in the inner bearing ring (2) into the second cage pocket (24) of the basic parts (21) of the cage segments (17) of the bearing cage (8);
f) repetition of method steps d) and e) until all the cage pockets (24) of the basic parts (21) of the cage segments (17) of the bearing cage (8) are filled with the rolling bodies (6) of the first row (4);
g) axial pushing of the inner bearing ring (2) into the outer bearing ring (3) until the rolling bodies (6) of the first row (4) lie in the first raceway (12) of the two bearing rings (2, 3);
h) insertion of the basic parts (22) of the cage segments (18) of the bearing cage (9) for the row (5) of rolling bodies (7) which is designed as spherical rollers into the second raceway (13) of the outer bearing ring (3);
i) orientation of the inner bearing ring (2) in such a way that the filling bore (16) in the inner bearing ring (2) is aligned laterally with a first cage pocket (25) of the basic parts (22) of the cage segments (18);
j) introduction of a first spherical roller through the filling bore (16) in the inner bearing ring (2) into the first cage pocket (25) of the basic parts (22) of the cage segments (18) of the bearing cage (9);
k) further rotation of the inner bearing ring (2) in the circumferential direction until the filling bore (16) in the inner bearing ring (2) is aligned with a second cage pocket (25) of the basic parts (22) of the cage segments (18);
l) introduction of a second spherical roller through the filling bore (16) in the inner bearing ring (2) into the second cage pocket (25) of the basic parts (22) of the cage segments (18) of the bearing cage (9);
m) repetition of method steps k) and 1) until all the cage pockets (25) of the basic parts (22) of the cage segments (18) of the bearing cage (9) are filled with the rolling bodies (7) of the second row (5);
n) setting of the outer bearing ring (3) in rotational movement with a rotational speed at which the rolling bodies (7) designed as spherical rollers are automatically set up vertically in their raceway (13) as a result of centrifugal force;
o) pushing of the upper parts (23) onto the basic parts (22) of the cage segments (18) of the bearing cage (9), at the same time as tilting the spherical rollers into their pressure angle and latching of the upper parts (23) in the operating position;
p) optional greasing of the axial angular-contact rolling bearing (1) through the filling bore (16) in the inner bearing ring (2) and closing of the filling bore (16) by means of the plastic plug (20).

17. Method according to Claim 16, **characterized in that** the necessary pre-stress of the axial angular-contact rolling bearing (1) is set by means of a targeted axial and/or radial offset between the two raceways (12, 13) in the bearing rings (2, 3), manufacturing tolerances being compensatable by means of different pairings of bearing rings (2, 3) and different assortments of rolling bodies (6, 7).

## Revendications

1. Palier à roulement à contact oblique axial (1), en particulier pour le support sur palier de tables tournantes sur des machines-outils, constitué essentiellement d'une bague de palier interne d'une seule pièce (2) et d'une bague de palier externe d'une seule pièce (3) ainsi que d'une plurality de corps de roulement disposés les uns à côté des autres (6, 7), entre les bagues de palier (2, 3) dans au moins deux rangées (4, 5) inclinées les unes vers les autres, lesquels corps de roulement sont maintenus à intervalles réguliers les uns par rapport aux autres dans la direction périphérique par au moins deux cages de palier (8, 9) et roulent suivant des angles de pression définis avec leurs surfaces de roulement sur au moins deux chemins de roulement (12, 13) disposés l'un à côté de l'autre sur le côté extérieur (10) de la bague de palier interne (2) et sur le côté intérieur (11) de la bague de palier externe (3), **caractérisé en ce que** l'une des au moins deux rangées (4, 5) de corps de roulement (6, 7) est formée par des billes de palier, tandis que l'autre des au moins deux rangées (4, 5) de corps de roulement (6, 7) se compose de rouleaux sphériques avec à chaque fois deux faces latérales disposées parallèlement l'une à l'autre (14, 15) aplaties symétriquement par rapport à une forme de base sphérique, la bague de palier interne (2) présentant un alésage de remplissage radial (16) unique, disposé de manière excentrée axialement à côté de l'un des chemins de roulement (12, 13), par le biais duquel tous les corps de roulement (6, 7) des au moins deux rangées (4, 5) peuvent être insérés dans leurs chemins de roulement (12, 13) et **en ce que** les cages de palier (8, 9) des au moins deux rangées (4, 5) de corps de roulement (6, 7) sont réalisées sous forme de cages de segments constituées de plusieurs segments de cage identiques (17, 18) alignées les uns contre les autres.

2. Palier à roulement à contact oblique axial (1) selon la revendication 1, **caractérisé en ce qu'**il présente de préférence deux rangées (4, 5) de corps de roulement (6, 7) inclinées l'une vers l'autre suivant un agencement en O, dont la rangée (4) tournée vers la table tournante est constituée de billes de palier et la rangée (5) opposée à la table tournante est constituée de rouleaux sphériques, les deux rangées (4, 5) présentant de préférence des diamètres de cercles partiels identiques et tous les corps de roulement (6, 7) présentant le même diamètre.

3. Palier à roulement à contact oblique axial (1) selon la revendication 2, **caractérisé en ce que** l'alésage de remplissage radial (16) est disposé dans la bague de palier interne (2) directement à côté du chemin de roulement (13) de la rangée (5) de corps de roulement (7) réalisés en tant que rouleaux coniques et est réalisé, au niveau de son embouchure du côté extérieur de la bague interne, d'un côté avec un biseau de remplissage (19) en forme de chanfrein orienté vers ce chemin de roulement (13) pour faciliter l'insertion des rouleaux sphériques.

4. Palier à roulement à contact oblique axial (1) selon la revendication 3, **caractérisé en ce que** l'alésage de remplissage radial (16) présentant un diamètre légèrement plus grand que les corps de roulement (6, 7) dans la bague de palier interne (2) peut être fermé au niveau de son embouchure du côté intérieur de la bague interne de préférence par un bouchon en plastique (20) réalisé sous forme creuse et est prévu en tant que réservoir de lubrifiant supplémentaire pour le palier à roulement à contact oblique axial (1).

5. Palier à roulement à contact oblique axial (1) selon la revendication 3, **caractérisé en ce que** l'alésage de remplissage radial (16) présentant un diamètre légèrement plus grand que les corps de roulement (6, 7) dans la bague de palier interne (2) est prévu pour recevoir un système de capteurs supplémentaires pour un système de contrôle de température, d'usure, de charge ou de vitesse de rotation ou pour recevoir un organe de fixation supplémentaire pour des états de fonctionnement statiques.

6. Palier à roulement à contact oblique axial (1) selon la revendication 2, **caractérisé en ce que** les segments de cage individuels (17, 18) des cages de palier (8, 9) des deux rangées (4, 5) de corps de roulement (6, 7) se composent à chaque fois de pièces de base identiques (21, 22) et au moins les segments de cage (18) de la cage de palier (9) pour la rangée (5) de corps de roulement (7) réalisés sous forme de rouleaux sphériques présentent en outre à chaque fois une deuxième partie supérieure (23) pouvant être enfichée sur la partie de base (22).

7. Palier à roulement à contact oblique axial (1) selon la revendication 6, **caractérisé en ce que** les parties de base (21, 22) des segments de cage (17, 18) des deux cages de palier (8, 9) sont à chaque fois réalisées avec deux ou plus de deux poches de cage (24, 25) rondes circulaires correspondant au diamètre des corps de roulement (6, 7), qui présentent en outre, au niveau de leur côtés intérieurs, dans la direction périphérique à la hauteur de l'axe longitudinal des poches (A_{L}), des faces d'appui concaves (26, 27) pour les corps de roulement (6, 7).

8. Palier à roulement à contact oblique axial (1) selon la revendication 7, **caractérisé en ce que** les poches de cage (24, 25) présentent, dans les parties de base (21, 22) des segments de cage (17, 18) au niveau de leur moitié de diamètre tournée vers l'alésage de remplissage (16) dans la bague de palier interne (2), à chaque fois un élargissement trapézoïdal (28, 29) s'étendant parallèlement à l'axe longitudinal des poches (A_{L}) pour faciliter l'insertion des corps de roulement (7) réalisés sous forme de rouleaux sphériques.

9. Palier à roulement à contact oblique axial (1) selon la revendication 8, **caractérisé en ce que** les parties de base (21, 22) des segments de cage (17, 18) des deux cages de palier (8, 9) sont réalisées, au niveau de leur partie de bord du côté extérieur du palier, à chaque fois à la hauteur des nervures de poches (30, 31) formées entre les poches de cage (24, 25), avec plusieurs rainures en forme de profilés en T (32, 33) pour la fixation en position de la partie supérieure (23) des segments de cage (17, 18) devant éventuellement être enfichée.

10. Palier à roulement à contact oblique axial (1) selon la revendication 9, **caractérisé en ce que** les parties de base (21, 22) des segments de cage (17, 18) des deux cages de palier (8, 9) présentent entre les rainures (32, 33) dans leur surface supérieure plusieurs renfoncements en forme de clavette (34, 35) dans lesquels les parties supérieures (23), devant éventuellement être enfichées, des segments de cage (17, 18) des deux cages de palier (8, 9) peuvent être bloquées axialement par engagement positif à chaque fois par une connexion par encliquetage.

11. Palier à roulement à contact oblique axial (1) selon la revendication 6, **caractérisé en ce que** les parties supérieures (23) des segments de cage (18) de la cage de palier (9) pour les corps de roulement (7) réalisés sous forme de rouleaux sphériques présentent au niveau de leur partie de bord du côté intérieur du palier un biseautage (36) s'étendant sur toute leur longueur, lequel pénètre dans la position de montage dans les poches de cage (25) et fixe les rouleaux sphériques par le biais de leurs faces latérales (15) dans leur angle de pression.

12. Palier à roulement à contact oblique axial (1) selon la revendication 11, **caractérisé en ce que** les parties supérieures (23) des segments de cage (18) de la cage de palier (9) pour les corps de roulement (7) réalisés sous forme de rouleaux sphériques présentent au niveau du côté inférieur de leur partie de bord du côté extérieur du palier plusieurs nervures (37) en forme de profilé en T correspondant au nombre des rainures (32, 33) dans les parties de base (21, 22), pour la fixation en position de la partie supérieure (23), devant être enfichée, du segment de cage (18).

13. Palier à roulement à contact oblique axial (1) selon la revendication 12, **caractérisé en ce que** les parties supérieures (23) des segments de cage (18) de la cage de palier (9) pour les corps de roulement (7) réalisés sous forme de rouleaux sphériques présentent, entre les nervures (37) au niveau de leur côté inférieur, plusieurs rehaussements en forme de clavette (38) faisant saillie hors de ce côté inférieur, avec lesquels les parties supérieures (23) peuvent être bloquées axialement par engagement positif dans les renfoncements (35) des parties de base (22).

14. Palier à roulement à contact oblique axial (1) selon la revendication 13, **caractérisé en ce que** les rehaussements en forme de clavette (38) au niveau des côtés inférieurs des segments de cage (18) de la cage de palier (9) sont disposés de préférence à l'extrémité de langues élastiques (39) qui sont façonnées à chaque fois au niveau d'une paroi latérale d'évidements (40) en forme de trous oblongs (40) pratiqués en outre dans les segments de cage (18), en pénétrant dans ces évidements.

15. Palier à roulement à contact oblique axial (1) selon la revendication 6, **caractérisé en ce que** la distance entre les bagues de palier (2, 3) au niveau des deux côtés axiaux du palier à roulement à contact oblique axial (1) est seulement suffisamment grande pour que celui-ci, en coopération avec les segments de cage (17, 18) des deux cages de palier (8, 9), forme à chaque fois un joint à labyrinthe empêchant la pénétration de saleté depuis l'extérieur et la fuite de lubrifiant se trouvant à l'intérieur du palier.

16. Procédé de montage d'un palier à roulement à contact oblique axial (1) ayant les caractéristiques des revendications 1 à 15, **caractérisé par** les étapes suivantes :
a) introduction des parties de base (21) des segments de cage (17) de la cage de palier (8) pour la première rangée (4) des corps de roulement (6) réalisés sous forme de billes de palier dans le premier chemin de roulement (12) de la bague de palier externe (3) ;
b) introduction coaxiale de la bague de palier interne (2) dans la bague de palier externe (3) dans une mesure telle que l'alésage de remplissage (16) dans la bague de palier interne (2) s'aligne avec une première poche de cage (24) des parties de base (21) ;
c) insertion d'une première bille de palier à travers l'alésage de remplissage (16) dans la bague de palier interne (2) dans la première poche de cage (24) des parties de base (21) des segments de cage (17) de la cage de palier (8) ;
d) rotation supplémentaire de la bague de palier interne (2) dans la direction périphérique jusqu'à ce que l'alésage de remplissage (16) dans la bague de palier interne (2) soit aligné avec une deuxième poche de cage (24) des parties de base (21) des segments de cage (17) ;
e) insertion d'une deuxième bille de palier à travers l'alésage de remplissage (16) dans la bague de palier interne (2) dans la deuxième poche de cage (24) des parties de base (21) des segments de cage (17) de la cage de palier (8) ;
f) répétition des étapes de procédé d) et e) jusqu'à ce que toutes les poches de cage (24) des parties de base (21) des segments de cage (17) de la cage de palier (8) soient remplies avec les corps de roulement (6) de la première rangée (4) ;
g) insertion axiale de la bague de palier interne (2) dans la bague de palier externe (3) dans une mesure telle que les corps de roulement (6) de la première rangée (4) s'appliquent dans le premier chemin de roulement (12) des deux bagues de palier (2, 3) ;
h) introduction des parties de base (22) des segments de cage (18) de la cage de palier (9) pour la rangée (5) de corps de roulement (7) réalisées sous forme de rouleaux sphériques dans le deuxième chemin de roulement (13) de la bague de palier externe (3) ;
i) orientation de la bague de palier interne (2) de telle sorte que l'alésage de remplissage (16) dans la bague de palier interne (2) soit aligné latéralement avec une première poche de cage (25) des parties de base (22) des segments de cage (18) ;
j) insertion d'un premier rouleau sphérique à travers l'alésage de remplissage (16) dans la bague de palier interne (2) dans la première poche de cage (25) des parties de base (22) des segments de cage (18) de la cage de palier (9) ;
k) rotation supplémentaire de la bague de palier interne (2) dans la direction périphérique jusqu'à ce que l'alésage de remplissage (16) dans la bague de palier interne (2) soit aligné avec une deuxième poche de cage (25) des parties de base (22) des segments de cage (18) ;
l) insertion d'une deuxième bille de palier à travers l'alésage de remplissage (16) dans la bague de palier interne (2) dans la deuxième poche de cage (25) des parties de base (22) des segments de cage (18) de la cage de palier (9) ;
m) répétition des étapes de procédé k) et 1) jusqu'à ce que toutes les poches de cage (25) des parties de base (22) des segments de cage (18) de la cage de palier (9) soient remplies avec les corps de roulement (7) de la deuxième rangée (5) ;
n) mise en rotation de la bague de palier externe (3) à une vitesse à laquelle les corps de roulement (7) réalisés sous forme de rouleaux sphériques se placent verticalement dans leur chemin de roulement (13) automatiquement sous l'effet de la force centrifugé ;
o) enfoncement des parties supérieures (23) sur les parties de base (22) des segments de cage (18) de la cage de palier (9) lors d'un basculement simultané des rouleaux sphériques suivant leur angle de pression et encliquetage des parties supérieures (23) dans la position fonctionnelle ;
p) graissage optionnel du palier à roulement à contact oblique axial (1) à travers l'alésage de remplissage (16) dans la bague de palier interne (2) et fermeture de l'alésage de remplissage (16) avec le bouchon en plastique (20).

17. Procédé selon la revendication 16, **caractérisé en ce que** la précontrainte nécessaire du palier à roulement à contact oblique axial (1) est ajustée par un décalage ciblé axial et/ou radial entre les deux chemins de roulement (12, 13) dans les bagues de palier (2, 3), des tolérances de fabrication pouvant être compensées par des appariements différents de bagues de palier (2, 3) et des assortiments différents de corps de roulement (6, 7).
